# EUROPEAN PATENT SPECIFICATION

(11) **EP 0 748 364 B1**
(45) Date of publication and mention of the grant of the patent: **21.11.2007**
(21) Application number: 95913972.6
(22) Date of filing: 02.03.1995
(51) Int. Cl.: C10L 1/30, C10L 1/18, C10L 1/14, C10L 1/02, C10L 1/10, C10L 10/00, C10L 10/02

(54) **UNLEADED FUEL COMPOSITIONS**
UNVERBLEITE TREIBSTOFFZUSAMMENSETZUNGEN
COMPOSITIONS DE CARBURANT SANS PLOMB

(30) Priority: 02.03.1994 US 205945; 11.04.1994 US 226490; 31.05.1994 US 251723
(43) Date of publication of application: 18.12.1996
(73) Proprietor: ORR, William C., Denver, Colorado 80210 (US)
(72) Inventor: ORR, William C., Denver, Colorado 80210 (US)
(74) Representative: Schmitz, Jean-Marie
(86) International application number: PCT/US1995/002691
(87) International publication number: WO 1995/023836

(56) References cited:
- EP-A- 0 466 511
- EP-A- 0 474 342
- EP-A- 0 540 297
- EP-A- 0 609 089
- WO-A-87/01384
- WO-A-94/04636
- US-A- 3 030 195
- US-A- 3 224 848
- US-A- 3 346 648
- US-A- 3 976 437
- US-A- 4 207 078
- US-A- 4 244 704
- US-A- 4 270 929
- US-A- 4 468 233
- US-A- 4 674 447
- US-A- 4 812 146
- US-A- 5 013 329
- US-A- 5 113 803

## Description

### BACKGROUND OF THE INVENTION

### Field of the Invention

This invention relates to organomanganese fuel combinations, mechanical and/or chemical means capable of improving combustion, and/or reducing combustion temperatures, whereby thermal efficiency and hazardous emissions are improved.

### Description of the Prior Art

The incorporation of various organo-manganese compounds as anti-knock agents (e.g. methylcyclopendienyl manganese tricarbonyl -MMT, et al.) in hydrocarbon fuels is known. See U.S. Patents 2,818,417; 2,839,552; and 3,127,351.

Despite organo-manganese's anti-knock and other benefits, its use in hydrocarbon fuels produces another set of environmental and practical problems. Namely, organo-manganese compounds when combusted in hydrocarbon fuels generate harmful heavy manganese oxides (Mn₃O₄ and Mn₂O₃); which in turn coat engine parts, combustion systems, turbines, exhaust surfaces, emission/exhaust catalysts, etc., causing for example, early fatigue, failure, excessive wear, particulate emissions of metals, long term hydrocarbon emission degradation, and the like. See U.S. Patents 3,585,012; 3,442,631; 3,718,444; and my EPO Patent # 0235280.

It is also known that such deposits create a diffusional barrier on catalyst surfaces, which degrades catalytic efficiency. See Williamson, Gandhi, Weaver, "Effects of Fuel Additive MMT on Contaminant Retention and. Catalyst Performance," SAE Paper 821193, 1982.

Recently, automotive manufacturers have raised renewed concerns regarding manganese's propensity to form deleterious oxides, that even at very low concentrations of 0.008 g Mn/l (1/32 gram manganese) new onboard catalyst diagnostic systems known as "OBD-11 catalyst efficiency monitors" are impaired due oxide deposition on catalyst wash coat surfaces. See Hurley, Hansen, Guttridge, Gandhi, Hammerle, and Matso, "The Effect on Emissions and Emission Component Durability by the Fuel Additive Methylcyclopentadienyl Manganese Tricarbonyl (MMT)," SAE Paper 912437, 1991; Hurley et al, "Characterization of Automotive Catalysts Exposed to the Fuel Additive MMT," SAE Paper 890582, 1989; Hubbard el al, "Effect of MMT on the OBD-II Catalyst Monitor," SAE Paper 932855, 1993.

### Summary of Invention

Applicant has discovered the operating mechanism causing fuels containing metallics, including organomanganese compounds to generate adverse heavy particulate/coating Mn oxides during combustion, which is namely caused by a less than ideal combustion process wherein combustion burning velocities and temperatures are not optimum.

By effectively increasing the burning velocity of the fuel, while ideally reducing combustion temperatures, Applicant not only controls or avoids the generation.of adverse metallic oxides, but liberates the capacity of non-lead metallics to become principles in a new clean "high energy source" class of propellants/fuels and combustion process.

In essence Applicant has discovered a combustion process that comprises certain chemical structure/sub-structure and/or mechanical structure/sub-structure that simultaneously 1) increases burning velocity, 2) sustains a high release rate of what might be known as free energy, at 3) reduced combustion temperatures.

### BRIEF DESCRIPTION OF THE DRAWINGS

Figure 1. **Combustion Temperature Differences,** compares differences in combustion temperatures of differing fuel compositions measured via exhaust gas temperatures at different engine loads.
Figure 2. **Combustion Temperatures and Hydrocarbon Emissions,** compares combustion temperature differences and their relationship to the generation of hydrocarbons emissions.
Figure 3. **Combustion Temperatures and Nox Emissions,** compares combustion temperature differences and their relationship to the generation of NOx emissions.
Figure 4. **Indicated Burning Velocity,** compares the burning velocity of different fuels under differing loads.
Figure 5. **Burning Velocity and HC Emissions,** compares burning velocity to the generation of HC emissions.
Figure 6. **Burning Velocity and NOX Emissions,** compares burning velocity to the generation of NOx emissions.
Figure 7. **Technical Enleanment,** shows warm driveability and combustion improvements of gasoline due to maintaining minimum distillation temperatures for fuel containing oxygenated compounds.

### DETAILED DESCRIPTION OF INVENTION

Applicant's discovery is discovery of the source of the heavy metallic oxide problem and its attendant solution, e.g increased burning velocity and/or reducing combustion temperatures.

In the context of this invention, Applicant generally refers to thermal efficiency, hereinafter, in both its chemical and mechanical context, e.g. the efficiency of the chemical reaction and the amount of useful work generated in the system, e.g. free energy.

Applicant has found, thermal efficiency, particularly as measured as a function of net useful work generated by the system is increased.

For example, Applicant's has unexpectedly discovered thermal efficiency over existing fuels and combustion systems to be on the order of 2.0% to 20%.

The invention fundamentally resides in increasing 1) burning velocity by a) increasing laminar burning velocity (ECS chemical and/or distillation modification means), b) increasing turbulent velocity (chemical and/or mechanical means), 2) reducing combustion temperature (chemical or mechanical means), in combination with a metallic component based fuel.

It is contemplated that compounds/components and/or chemical and/or mechanical, processes, methods and means, including combinations and subcombinations thereof, which increase combustion burning velocity be employed. It is preferred that, while not required, that combustion temperatures be simultaneously reduced.

In the practice of the invention, should an oxygenated compound be employed, maximizing oxygen is a desire. Oxygen contents may range from 0.0001 to 80.0% by weight. Individual fuel composition and combustion systems dictate.' However, beneficial results do not tend to occur until 1.0%, 1.5%, 2.0% or more oxygen is included. More preferred concentrations are 2.0% or more. A desirable range is from 0.001 to 30.0% oxygen by weight. Additional weight concentrations of oxygen include 0.001 to 15.0%., 0.5% to 1.5%, 0.3% to 2.7%, 2.0% to 3.7%, 0.2% to 0.9%, 1.0% to 4%, 2.0% to 8.0%, 1.8% to 12%, 2.0% to 10.0%, 3.0%, 5.0% to 40%, 2.0% to 53%

In the practice of this invention, acceptable increases in the rate of the fuel's burning velocity over an unadjusted fuel or combustion system will range from 1.0% to approximately 800%, or more. Velocity increases of 0.2%, 0.5%, 1.0%, 2.0%, 3.5%, 5% to 10.0%, 7.0% to 15.%, 9.0% to 25%, 5.0% to 20%, 12% to 30%, 15% to 40%, 20% to 50% are desirable.

It is an object of Applicant's invention that the diffusion of pre/post ignition pre-combustion gases operate to increase the momentum/viscosity of the unburned gas to as close as possible to the viscosity of the burned gas, in order to reduce the viscous drag between the burned and the unburned gases. It is in the elimination of this drag, which the principal object of increases in burning velocity are achieved.

It is expressly contemplated that combustion systems, which permit the use of a higher compression ratio on fuels of a given octane number, be employed.

Chemical and/or mechanical means, including for example, exhaust oxygen sensing systems (including EGO sensors) that adjust fuel-air equivalency ratios, which enhance the burning velocity object of this invention, are desirable and contemplated.

### BOILING TEMPERATURE REDUCTION AND MODIFICATION PRACTICE

Improving burning velocities are contemplated. One such means is by reducing the end boiling point of the composition.

It is Applicant's intent that reduction and/or modification of hydrocarbon co-fuel's T-90, T-50, or T-10 distillation be modifying underlying hydrocarbons streams, or tailoring.

Thus, by reducing boiling temperatures, e.g. end boiling and T-90 temperatures, in combination with Applicant's invention, combustion temperatures and/or burning velocity is improved.

In wide boiling petroleum fractions, e.g. gasolines, etc., reducing the fuel's distillation boiling temperatures, especially end point and/or T 90 temperature by 2,8°C (5°F) to 11,1°C (20°F), 5,6°C(10°F) to 16,7°C(30°F), 11,1°C(20°F) to 27,8°C(50°F), 13.9°C(25°F) to 33,4°C(60°F), 22,2°C(40°F) to 38,9°C(70°F), 27,8°C(50°F) to 44,5°C(80°F). or more, is particularly effective in increasing combustion burning velocities, etc.

Thus, it is a specific embodiment of this invention to reduce end point and T-90 boiling temperatures

Preferred boiling point practice reduction includes the elimination of higher boiling point alkanes, aromatic hydrocarbons, cyclanes, alkenes are preferred.

Applicant notes, mid range boiling point control is particularly important in fuel application where oxygenates are employed.

In the practice of this invention, said boiling point modification/control, enhances combustion and/or the burning velocity features of the fuel.

When an oxygenated compound is employed in excess of 0.5% by weight oxygen content in the fuel, especially for operation in current engines, mid-range temperatures should be from about 71,1°C(160°F) 76,7°C (170°F) 82,2°C (180°F) to about 96,1°C (205°F). Mid range temperatures outside these ranges appear to be less effective.

Importantly, Applicant has discovered when employing both T-90 temperature reduction and mid-range temperature control, the Mn fuel (absent the inclusion of an oxygenate) achieves maximum combustion advantage, e.g. improved fuel economy, reduced manganese oxide formation, and/or improved warm driveability.

Furthermore, the inclusion of an oxygenate enhances this beneficial effect. The better the ECS oxygenated compound the better the beneficial result.

### Example 1

An example fuel, wherein MMT is contained in a quality of 0.008g Mn/l or less (1/32 gram mn or less, per gallon).

### Example 2

The example of 1, where an oxygenated ECS compound is employed in excess of 0.5% by weight for operation in current automotive engine, and wherein the gasoline's mid-range temperature is from 76.7°C (170°F) to approximately 96.1°C (205°F).

### Example 3

The example of 2, wherein the composition comprises an ECS compound in a sufficient concentration to increase average burning velocity of composition by an additional 5.0%, or more, over clear composition as measured by laminar bunsen burner.

### Example 4

The example of 3, wherein the addition of the ECS compound is sufficient to reduce average combustion temperatures by 13.9°C (25°F), as measured under load of at least 14,71 ikW (20 indicated horse power (ihp)).

Applicant notes this aspect of his invention (e.g. addition of ECS compound with/or without metallic) as applied to gasoline is especially beneficial when T-90 temperatures are equal to or below approximately 148,9°C (300°F), 137.8°C (280°F), and optionally when T-50 temperatures are in the range of approximately 76,7°C (170°F) to 96,1°C (205).

### COMBUSTION TEMPERATURE MODIFICATION

In the practice of this invention, preferred reductions in combustion temperatures range from 5,6°C (10°F) to 277.8 °C (500°F). Reductions of 13.9 °C (25°F) to 27.8 °C (50°F), or more, are desireable. Reductions of 55.8 °C (100**°**F), or more, are desireable. Reductions of 2.8 °C (5°F) to 8.3 °C (15°F), 5,6 °C (10°F) to 13.9 °C (25 °F), 8.3 °C (15°F) to 16.7 °C (30°F) or more, are preferred,

In the case of gasoline, reduced exhaust temperature translates into increased power and/or reductions of exhaust catalyst inlet temperatures. It is an express embodiment of this invention that exhaust catalyst inlet temperatures be reduced to avoid catalyst plugging. Hence it is an express object to reduce catalyst inlet temperatures to about 760°C (1400°F) or less, 732.2°C (1350°F), 704.4°C (1300°F), 676.7°C(1250°F), 648,9°C (1200°F), 621,1°C (1150°F), 593,3°C (1100°F), 565,6°C (1050°F), or less, other temperature sufficient to assure acceptable catalyst activity while avoiding the likely hood of manganese oxide plugging.

### Example 5

A method of avoiding the plugging or coating of exhaust catalysts with manganese oxides, said method comprising: mixing an ECS fuel with a conventional unleaded or reformulated gasoline containing 0.008g Mn/l (1/32 gr Mn/gal) of MMT, wherein said fuel's combustion and exhaust temperatures are sufficiently reduced that inlet exhaust gas temperature of catalyst is less than 760°C (1400°f), more preferably less than 648,9 °C (1200°F).

### CHEMICAL MEANS

It has been unexpectedly discovered that certain molecular features of combustion are responsible for the rapid diffusion of heat and active reaction centers in unburned gases, including the rapid diffusion of unburned gases in front of the flame front, resulting in increased burning velocities. Such molecular structure includes, but is not limited to H, H₂, O, O₂, CO, F, F2, F3, N, B, Be, BO, B2, BF, AL ALO, CH3, NH3, CH, C2H2, C2H5, Li, ONH, NH, NH2, OCH₃ (methoxy radicals), OCH, OCH₂, and OH (hydroxyl radicals). Additional chemical structure believed capable of achieving beneficial results include Cl, OCOO, COOH, C2H5OOC, CH3CO, OCH20, OCHCO, and CONH2.

Applicant refers to this structure as Enhanced Combustion Structure (ECS) and compounds containing the structure as ECS compounds.

It also is particularly desireable that this ECS structure and/or the ECS compound have high latent heats of vaporization (enthalpy of vaporization), particularly those equal to or greater than 28.0 jK mole⁻¹. Other enthalpies of vaporization (at the boiling point) are those equal to or greater than 21, 22, 24, 26, 27, 30, 32, 34, 36, 38, 40, 42, 43, 45, or more jK mole⁻¹. Generally, the higher the better.

The molecular structure yielding high latent heat and/or accelerated burning velocity, etc., to wit, that structure causing the immediate high kinetic diffusion of the unburnt combustion vapor, etc., and/or otherwise acting in the combustion process to increase burning velocity (and exhaust velocity), and/or reduce combustion (and/or exhaust) temperatures is hereinafter referred to as "Enhanced Combustion Structure or ECS." Those compounds which contain such structure are referred to as ECS compounds.

Non-limiting examples of compounds that Applicant has identified that contain ECS structure and that are to be effective in accomplishing this object, include: hydrogen, carbon monoxide, methylene di methyl ether (also known as methylal, dimethoxy methane), carbonic acid dimethyl ester (also known as dimethyl carbonate), diethyl carbonate, methyl tertiary butyl ether (MTBE), ethyl tertiary butyl ether (ETBE), methyl tertiary amyl ether, methanol, ethanol, propanol, tertiary butyl alcohol, dimethyl ether, other C₃ to C₆ lower molecular weight alcohols, diethylene glycol dimethyl ether, diethylene glycol diethyl ether, dimethyl ether diethyl ether, isopropyl ether, diisopropyl, nitromethane, nitroethane, nitropropane, nitrous oxide, dinitrous oxide, nitric oxide, ozone, water, gas hydrates (methane hydrate), hydrogen peroxide, and similar compounds. Applicant believes many other ECS compounds exist, that have not yet been identified.

It is additionally contemplated that certain ECS compounds will be co-ECS compounds and required the assistance of one of more ECS compounds to either satisfactorily enhance burning velocity and/or to reduce combustion temperatures. For example, it may necessary to reduce combustion temperatures of certain high velocity ECS compounds by admixing an alcohol, carbonate and/or admixing water. It is expected that certain synergies exist between ECS compound, likely to enhance each's capability.

Manganese ranges for most traditional applications will be about 0.000264 to 1.32 g Mn/l (about 0.001 to about 5.00 grams Mn/gal) 0.000264 to about 0.793 g Mn/l (0.001 to about 3.00 grams Mn/gal) 0.000264 to about 0.528 g Mn/l (0.001 to about 2.00 grams Mn/gal) 0.000264 to 0.2642 g Mn/l (0.001 to 1.00 grams Mn/gal), 0.000264 to about 0.132 g Mn/l (0.001 to about 0.50 grams Mn/gal) 0.000264 to 0.1 g Mn/l (0.001 to 0.375 grams Mn/gal) 0.000234 to about 0.066 g Mn/l (0.001 to about 0.25 grams Mn/gal), or even 0.000264 to 0.033 g Mn/l (0.001 to 0.125 grams Mn/gal) or even 0.000264 to 0.0165 g Mn/l (0.001 to 0.0625 grams Mn/gal) of composition.

Manganese concentrations greater than 0.008g Mn/l, 0.0165 g Mn/l (1/32, 1/16 gram manganese per gallon) are also expressly contemplated and desireable.

It is an embodiment of this invention to substitute metallics including substituting metallics of the same group. Applicant contemplates latitude of substitution and/or mixing, including mix ratios, mix ingredients, etc. See for example U.S. Patents 3,353,938; 3,718,444; 4,139,349.

Cyclomatic compounds, including cyclopentadienyl carbonyls are expressly desireable. Their preparation is set forth in U.S. Patents Nos. 2,818,416, 3,127,351, 2,818,417, 2,839,552 (incorporated by reference). Applicant has found that methyl cyclopentadienyl tricarbonyl groups to be effective.

A preferred cyclomatic manganese tricarbonyl is cyclopentadienyl manganese tricarbonyl. A more preferred cyclomatic manganese tricarbonyl is methyl cyclopentadienyl manganese (MMT).

Non-limiting examples of acceptable substitutes include the alkenyl, aralkyl, aralkenyl, cycloalkyl, cycloalkenyl, aryl and alkenyl groups. Illustrative and other non-limiting examples of acceptable cyclomatic manganese tricarbonyl antiknock compounds include benzylylopentadienyl manganese tricarbonyl; 1.2-dipropyl 3-cyclohexylcyclopentadienyl manganese tricarbonyl; 1.2-diphenylcyclopentadienyl manganese tricarbonyl; 3-propenylienyl manganese tricarbonyl; 2-tolyindenyl manganese tricarbonyl; fluorenyl manganese tricarbonyl; 2.3.4.7 - propyflourentyl manganese tricarbonyl; 3-naphthylfluorenyl manganese tricarbonyl; 4.5.6.7-tetrahydroindenyl manganese tricarbonyl; 3-3ethenyl-4, 7-dihydroindenyl manganese tricarbonyl; 2-ethyl 3 (a-phenylethenyl) 4,5,6,7 tetrahydroindenyl manganese tricarbonyl; 3 - (a-cyclohexylenthenyl) -4.7 - diblydroindenyl manganese tricarbonyl; 1,2,3,4,5,6,7,8 - octahydrofluorenyl manganese tricarbonyl and the like. Mixtures of such compounds can also be used. The above compounds can be generally prepared by methods that are known in the art.

### ECS COMPOUND SUBSTITUTION

Applicant's teachings herein referring to any specific ECS compound, for example, dimethyl carbonate, may be substituted for any other ECS compound or component, which accomplishes Applicant's object and is consistent with the requirements of the fuel, combustion and/or emissions systems, etc. Thus, it is contemplated substitutions of compounds disclosed herein for any ECS compound may be made, so long as the object of Applicant's invention is maintained.

In other words, it is the express embodiment of this invention to substitute, combine, mix dimethyl carbonate with hydrogen, carbon monoxide, methanol, methylal, ethanol, n-propanol, i-propanol, methylene di methyl ether, dimethyl carbonate, methyl tertiary butyl ether (MTBE), ethyl tertiary butyl ether (ETBE), methyl tertiary amyl ether, diisopropyl ether, C₃ to C₆ lower molecular weight alcohols, dimethyl ether, diethylene glycol dimethyl ether, diethylene glycol diethyl ether, water, hydrogen peroxide and any other ECS compound, or mixture.

Additional non-limiting possible substitutions for dimethyl carbonate include ECS compounds selected from C2-C12 aldehydes, C2-C12 ethers (MTBE, ETBE, 2,2-diethyl-1,3-propanediol), C4 - C15 alcohols (furon, furfuryl, 1-hexanol, 2-hexanol, 3-hexanol, and polyethoxyethanols), C2-C12 oxides (2-methylfuran, methyltetrahydrofuran), C3 - C15 ketones (acetone, 2,3 butanedione, 2,5 hexanodione, 2,4 pentanedione, cyclopentanone), C3 -C15 esters (isopropyl acetate, ethyl acrylate), C3 - C12 diesters, C5 - C12 phenols (P-cresal, 2, 4 xylenal, 3-methoxyphenal), C5-C20 glycol ethers (including diethylene dimethyl ether, diethylene diethyl ether, diethylene dipropyl ether, diethylene dibutyl ether, including diethylene monomethyl ether, diethylene monoethyl ether, diethylene monobutyl ether), C4-C20 carbonates having boiling temperatures above 32.2°C (90°F) or more preferably 48.9°C (12°F), C5-C25 dicarbonates having boiling temperatures above 32.2°C (90°F) or more preferably 48.9°C (120°F), organic and inorganic peroxides, including di-tertiary butyl peroxide, alkyl peroxides, alkyl hydroperoxides, 2.5 dimethyl 2.5 di(tertiary butyl peroxy) hexane, tertiary batylcumyl peroxide, di(tertiaryamyl) peroxide, tertiary butyl hydroperoxide, tertiary amyl hydroperoxide, alkyl nitrate additives, including ethyl-hexyl nitrate and isopropyl nitrate, and mixtures thereof. Heavier ECS compounds may be used in lieu of the preferred dimethyl carbonate or oxygenated/ECS means and/or may be used in addition, with or without solvents.

The substituted ethers contemplated in this invention include branched and straight chain ethers, di ethers having two oxygen and dual ether linkage, and tri ethers having three oxygens and multiple ether linkages. Non-limiting examples include dimethyl ether, methyl ethyl ether, di ethyl ether, ethyl propyl ether, methyl normal propyl ether, ethyl isopropyl ether, methyl isopropyl ether, ethyl normal propyl ether, propyl ether, propyl isopropyl ether, diisopropyl ether, ethyl tertiary butyl ether, ethyl secondary butyl ether, methyl normal butyl ether, methyl isobutyl ether, methyl tertiary butyl ether, methyl secondary butyl ether, methyl normal amyl ether, methyl secondary amyl ether, methyl tertiary amyl ether, and methyl iso amyl ether. Additional non-limiting examples of acceptable di ethers (having two oxygens and dual ether linkage) include methylene di methyl ether, methylene di ethyl ether, methylene di propyl ether, methylene di butyl ether, and methylene di isopropyl ether.

In the practice of this invention, substituted higher molecular weight C4 ethers are particularly desireable,

Simultaneous fuel injection, by adequate means employing one or more injection systems (e.g. a dual fuel injector), of similar or dissimilar physical state fuels, e.g. gas with a liquid, is within the scope of this invention and expressly contemplated. Such application is expressly contemplated where the mixing of an ECS compound with a base co-fuel that may not be possible prior to fuel injection and/or to optimize combustion, which best occurs via separate injection. Separate injection is also contemplated when fuel mixing can not be achieved by other means prior to fuel injection and/or combustion.

For example, the introduction of a liquid hydrocarbon co-fuel and a gaseous ECS fuel, such as hydrogen into a combustion chamber or combustor would be accomplished by separate injection, tailored to the specific characteristics of the fuel, and combustion system, designed to maximize combustion burning velocity.

### Example 6

In combination, a combustion improving fuel containing a high latent heat of vaporization oxygenated based ECS compound and a combustion improving amount of a metallic, a combustion system, and an exhaust gas recirculation (ERG) system, wherein said fuel is combusted and exhaust gases are recirculated back into the combustion system.

### Example 7

The examples of 6, wherein the ERG system is a closed loop system.

### Example 8

The examples of 6-7, wherein the fuel in unleaded, the combustion system is for U.S. regulated gasolines, the combination additionally includes a regulated emission control system.

### Example 9

The example of 6, wherein the fuel contains oxygen in a concentration of 2.0% by wt. and a combustion improving amount of a cyclomatic manganese tricarbonyl compound in a concentration of 0.008 g Mn/l (1/32 gram of mn).

### Example 10

The example of 9, wherein the fuel enjoys an increased burning velocity, and thermal efficiency of the system is improved; whereby fuel economy is increased by at least 0.5%, 1.0%, 2.0%, 5.0%, 10% or more.

In the practice of this invention it is contemplated, especially in automotive applications to employ an exhaust emissions catalyst (three way catalysts, preferably monolithic catalysts) and to simultaneously employ an on board oxygen sensor, which in part measures the efficiency of the catalyst.

In the practice of this invention ignition promoters may' be employed, individually and/or in combination with ECS compounds, particularly in fuels which require higher temperatures to ignite, which extends their period of ignition. Such promoters include di-tertiary butyl peroxide, alkyl peroxides, alkyl hydroperoxides, alkyl nitrate additives, including ethyl-hexyl nitrate and iso-propyl nitrate, 2.5 dimethyl 2.5 di(tertiary butyl peroxy) hexane, tertiary butylcumyl peroxide, di(tertiaryamyl) peroxide, tertiary butyl hydroperoxide, tertiary amyl hydroperoxide, and mixtures thereof.

### EXAMPLE TESTS

In order to illustrate the attributes and objects of this invention, Applicant conducted a series of gasoline fuel tests. (Applicant notes that these example tests were conducted in a spark-ignited internal combustion engine, but the principal elements of the invention, namely those leading to improvements in combustion burning velocity and temperature reductions, are translatable to all Applicant's contemplated combustion systems, as will be seen below.)

### EXAMPLE TEST FUELS

A. MEOH FUEL 0.033025 grams manganese of MMT per liter of composition, 5% methanol and 5% ethanol by volume, and unleaded gasoline base.
B. ISO/HEX FUEL 0.033025 grams manganese of MtiT per liter, 10% isopropanol and 10% hexanol by volume, and unleaded gasoline base.
C. MTBE FUEL 0.033025 grams manganese of MMT per liter, 14.6% MTBE by volume, and unleaded gasoline base.
D. DMC FUEL 0.033025 grams manganese of MMT per liter, 4.6% Dimethyl Carbonate (DMC) by volume, and unleaded gasoline base.
E. METHYLAL FUEL 0.033025 grams manganese of MMT per liter, 7.2% Methylal by volume, and unleaded gasoline base.
F. THF FUEL 0.033025 grams manganese of KMT per liter, 1.6% Tetrahydrofuran by volume, and unleaded gasoline base.
G. HIGH MANGANESE (Mn) FUEL 0.5284 grams manganese of MMT per liter, 5% Methanol by volume, and unleaded gasoline base.
H. MANGANESE FUEL 0.033025 grams manganese of MMT per liter, and unleaded gasoline base.
I. BASE FUEL Unleaded gasoline base (clear fuel).

### Test Methodology

The above example fuels were tested in a 1988 Chevrolet C1500 pickup truck with a 350 CID V-8 engine, having a throttle-body fuel injection system and oxygen sensor-closed loop fuel control. The inclusion of this oxygen sensing system provided a means of adjusting the stoichiometry to compensate for variations in the oxygen content of the various test fuels. This feature eliminated bias in HC and NOx emissions due to oxygen content differences. In other words, a test fuel with a high oxygen content, tending to enlean combustion, would not necessarily show better or worse emissions than the fuel containing little or no oxygen.

The engine heads and valves were cleaned before each fuel was tested. A new oxygen sensor and new spark plugs were also installed.

Each fuel was subjected to two (2) principal tests. The First Test ("Test One") measured HC and NOx emissions from the engine over a forty (40) hour, steady state, 1000 rpm, no load cycle. The purpose of this no load, steady state test was to elicit worse case hydrocarbon (HC) emissions over time, e.g. generation of manganese oxides. It is known in the art that low load, idle conditions, are excellent conditions to exacerbate oxide formation, but it translates into HC emission increases as a function of time. Thus, this accelerated test Mn oxide formation and consequently HC emission degradation.

Prior to introducing each new test fuel, the clean engine was cured on the BASE fuel ("clear fuel") until exhaust emissions stabilized. This generally required approximately 3 to 6 hours of steady state operation. Hydrocarbon and NOx emissions were measured periodically utilizing Beckman exhaust emission analyzers. Table 5 sets forth a summary of the test results.

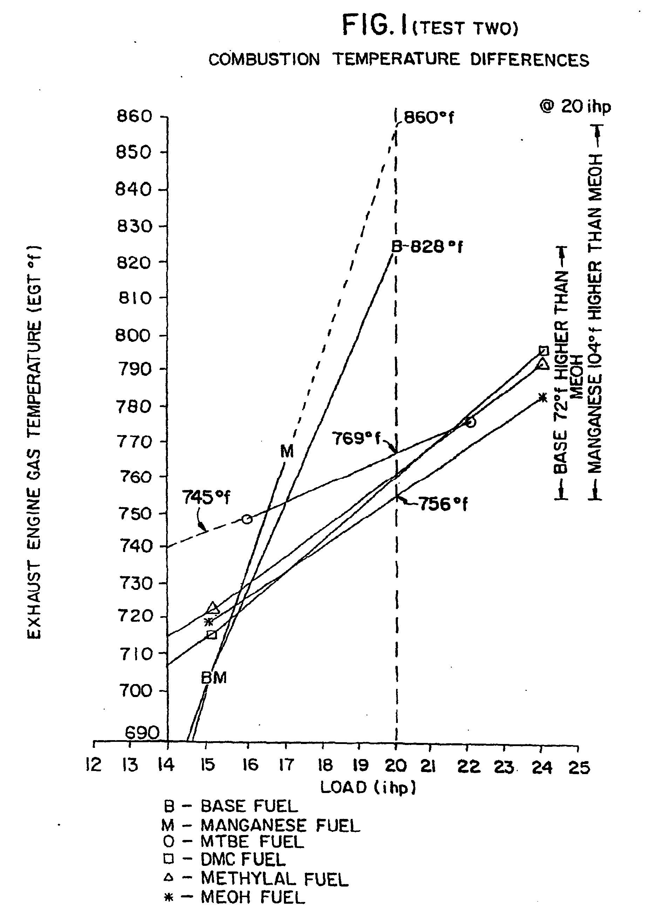

The Second Test ("Test Two") was conducted immediately after the First Test using the same fuel with the same engine still warm. The Second Test was conducted with the vehicle on a stationary chassis dynamometer. Test measurements were made at (50 mph) 80.5 kilometers per hour "kph" under varying load conditions, e.g. from 11.03 (15) to 17.65 ikW (24 indicated horse power ("ihp")). This test measured differences in combustion temperatures, fuel economy, HC and NOx emissions. The test was designed to show improvements of thermal efficiency, which would have been translated into improved fuel economy and emissions. See Figures 1 through 6 for a summary of results.

### DESCRIPTION OF TEST TWO "FIGURES 1 THROUGH 6"

### FIGURE 1

**Combustion Temperature Differences.** This Figure compares engine exhaust gas temperatures ("EGT") of the MANGANESE, BASE, MEOH, MTBE, METHYLAL, and DMC fuels as a function of engine load. Test Two placed the engine under load conditions at 80,5 kph (50 mph) in order to elicit differences in fuel combustion temperatures, measured by engine exhaust gas temperatures ("EGT").

At 11.03 ikW (15 ihp) the BASE and Manganese fuels are the same at (707°F) 375 °C, while the DMC, MEOH, and METHYLAL fuels range tightly from (717°F) 381°C, (722°F) 383 °C, and (724°F) 384°C, respectively. The MTBE fuel, which was tested at 11.77 ikW (16 ihp), measured (749°F) 398 °C. Thus, the BASE and Manganese fuel have lower exhaust gas temperatures at 11.03 ikW (15 ihp) ranging from -12.2°C (10°F) for DMC, -8.3°C (17°F) for METRYLAL, to 1.1°C (34°F) for MTBE (projected). At loads of over 11.40 ikw (15.5 ihp) the MEOH, DMC, METHYLAL have lower temperatures compared to Base and Manganese fuel. At loads over approximately 12.14 ikW (16.5 ihp) the MTBE fuel has lower temperatures. Thus, at moderate to lower loads BASE and Manganese fuels clearly have lower temperatures.

As load was increased above 11.03 ikW (15.0 ihp), temperatures increased rapidly for the Manganese and BASE fuels. The Manganese fuel increased the greatest. For example, at 14.71 ikW (20 ihp), the BASE fuel temperature was (828°F) 442°C and Manganese's projected temperature at the same ihp was (860°F) 460°C.

In contrast, the KEOH, MTBE, METHYLAL, and DMC fuels had lower rates of EGT increase. For example, at 17,65 ikW (24 ihp), the MEOH, METHYLAL, and DMC fuels were tightly grouped at (785°F) 418°C, (795°F) 424°C, and(798°F) 426°C, respectively. Similarly, MTBE showed an even lower rate of increase of (778°F) 414°C at 16,18 ikW (22 ihp).

The most significant aspect of Figure 1, is the strong showing that MEOH, MTBE, HETHYIAL, and DMC fuels, enjoy markedly lower temperature increases compared to the BASE or Manganese fuels, after reaching a threshold load of 11.40 ikW (15.5 to 12.14 ikW (16.5 ihp). For example, Figure 1 shows that at 14,71 ikW (20 ihp) the EGT for the Manganese fuel is (104°F) 40°C higher than the MEOH fuel. Additionally, Figure 1 shows that the fuels containing both Hn and an oxygenate (i.e., the MEOH, HTBE, METHYLAL, and DMC fuels) also had significantly lower combustion temperatures than the BASE fuel. For example, the MEOH fuel was (72o F) 22 °C lower than the BASE fuel.

Figure 1 shows that the higher the load, the greater the EGT differences between the two classes of fuels. Figure 1 indicates that under load conditions oxygenated ECS based fuels unexpectedly reduce combustion temperatures.

### FIGURE 2

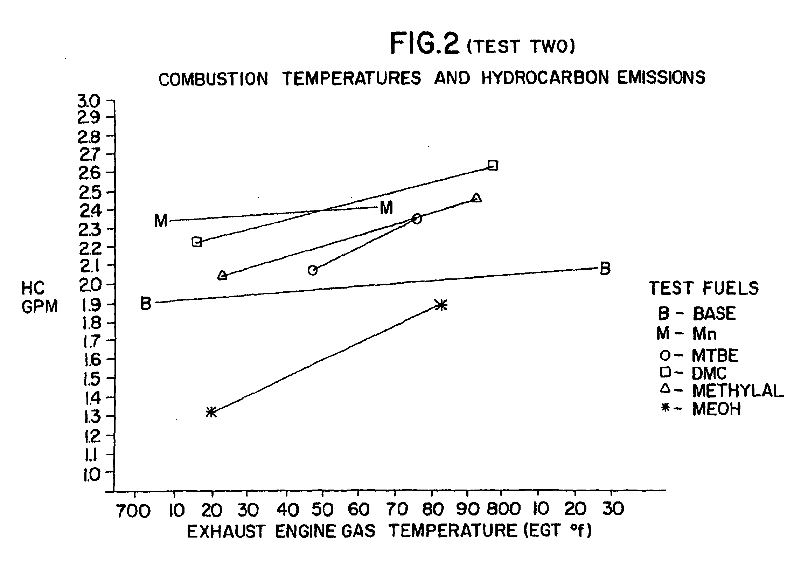

**Combustion Temperatures and Hydrocarbon Emissions.** This Figure shows hydrocarbon emissions of Test Two as a function of engine gas temperatures ("EGT"). This Figure shows that there is a direct correlation between HC emissions and engine gas temperatures. The relationship is most notable in the MEOH, MTBE, METHYLAL, and DMC fuels. Figure 2 shows that the HC/EGT rate of change for the various oxygenates is higher than the HC/EGT rate of change for the non-oxygenated fuels. Figure 2 shows that the lower the combustion temperature of a given oxygenate, the lower the HC emissions.

Figure 2 is noteworthy because it shows the sensitivity of all the fuels to changes in hydrocarbon emissions to changes in combustion temperatures. It is noted that the BASE and Manganese fuels are not quite as sensitive as the oxygenated ECS based fuels.

### FIGURE 3

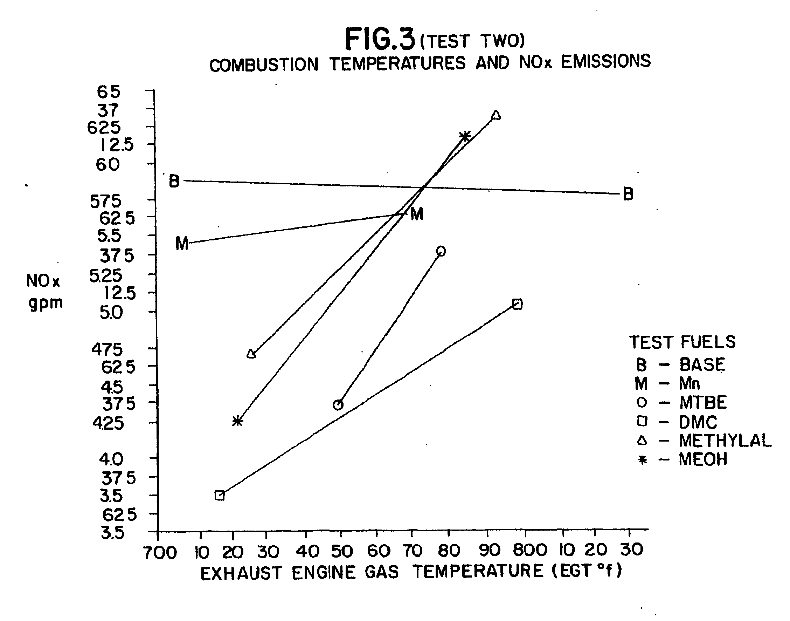

**Combustion Temperatures and NOx Emissions.** This Figure shows NOx emission results as a function of EGT. Figure 3, like Figure 2, shows a direct and significant relationship between NOx emissions and EGT for MEOH, MTBE, METHYLAL, and DMC fuels. This Figure clearly shows that at lower EGT's, particularly in the case of the MEOH, MTBE, METHYLAL, and DMC fuels, NOx emissions are much lower than when compared to the BASE and Manganese fuels.

Figure 3 is also noteworthy because it shows the sensitivity of the oxygenated ECS based fuels to changes in NOx emissions as a function to the change of combustion temperatures. It is noted that the BASE and Manganese fuels are again, as in the case of HC's, not sensitive. But, the oxygenated ECS based fuels, showing reduced combustion temperatures, unexpectedly show reduced Nox emissions.

### FIGURE 4

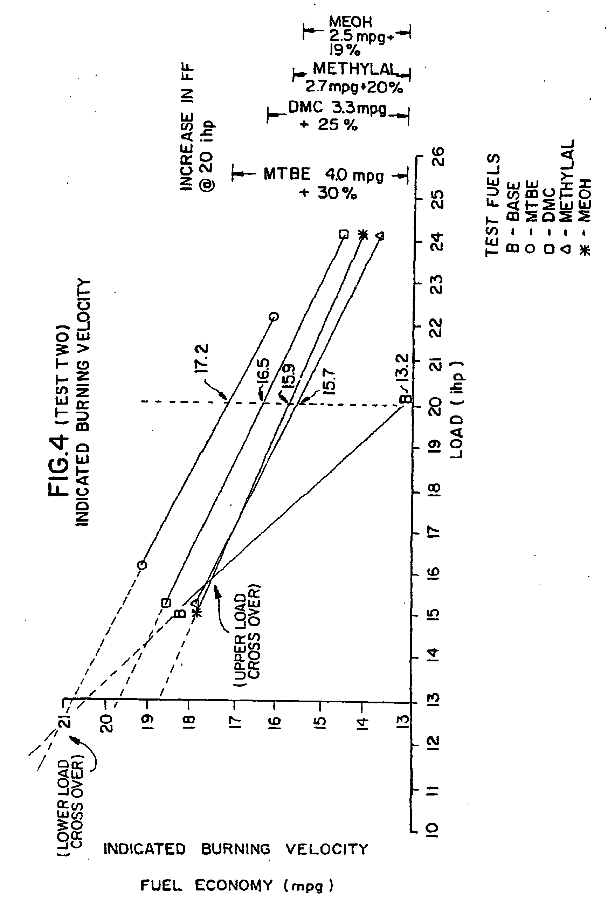

**Indicated Burning Velocity.** This Figure measures burning velocity indirectly via fuel economy measurements. It is known in the art that increases in fuel economy, absent a BTU boost, are an indirect indicator of possible flame speed changes. Figure 4 shows fuel economy in miles per gallon ("mpg") (or 0.42566 kilometers per liter "kpl") as a function of load (ihp). Figure 4 shows significant fuel economy ("FE") differences between the BASE and the oxygenated fuels under varying load conditions. On moderate loads less than approximately 9.19 ikW (12.5 ihp) (projected) for MTBE, 10.66 ikW (14.5 ihp) for DMC, and 11.77 ikW (16.0 ihp) for MEOH/KETHYLAL, base fuel shows superior fuel economy. However, on loads greater than approximately (13.0) to (16.0 ihp) fuel economy for MTBE, DMC, METHYLAL, MEOH fuels is unexpectedly increased.

Similar to the exhaust gas temperatures differences found in Fig. 1, once a threshold load had been passed, fuel economy is markedly improved for ECS fuels. Note, that at 14.71 ikW (20 ihp) the fuel economy of the Base fuel is (13.2 mpg) 5.619 kpl, compared to (15.7 mpg) 6.683 kpl, (15.9 mpg) 6.768 kpl , (16.5 mpg) 7.0234 kpl and(17.2 mpg) 7.321 kpl for METHYLAL, MEOH, DMC, and MTBE, respectively.

These material differences account for a 19% to 30% improvement in fuel economy over the BASE fuel, under moderate to moderately high loads. Thus, the oxygenated ECS based fuels containing METHYLAL, MEOH, DMC, and MTBE show substantial and unexpected fuel economy improvements under loads greater than approximately 11.03 ikW (15 ihp).

### FIGURE 5

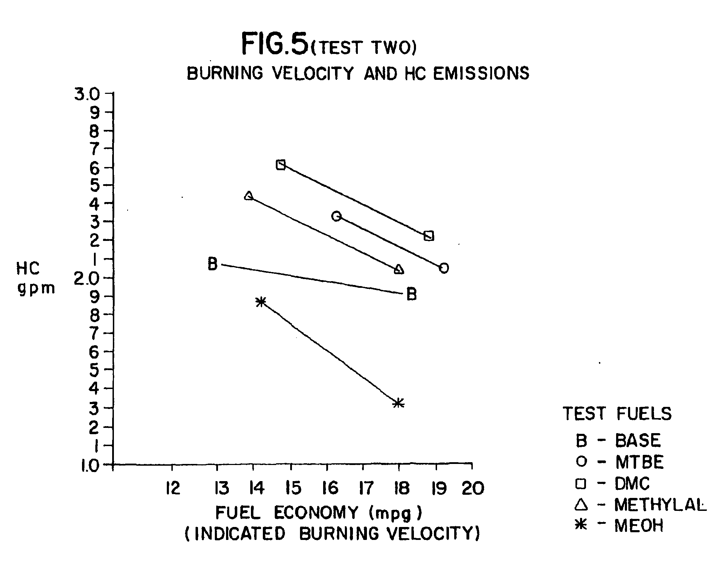

**Burning Velocity and HC Emissions.** This Figure shows HC emissions as a function of fuel economy, i.e. indicated burning velocity. Figure 4 shows a strong correlation between increased burning velocity to improvements in HC emissions. Figure 5 clearly shows that increased burning velocity for HETHYIAL, MEOH, DMC, and MTBE translates into improved HC emissions. This correlation is most apparent for the MEOH fuel.

Figure 5 is noteworthy because it shows the sensitivity of the oxygenated ECS base fuels to changes in hydrocarbon emissions as a function to changes in burning velocity. It is noted that all fuels indicate a positive correlation to improvements in HC's as a function of increased burning velocity. However, the base fuel is slightly less sensitive to HC improvement. Methanol appears to have the highest degree of sensitivity. Thus, again the correlations to increased burning velocities with the ECS based fuels, translates into improvements in HC emissions.

### FIGURB 6

**Burning Velocity and NOx Emissions**. This Figure shows NOx emissions as a function of fuel economy. This Figure shows a very strong correlation between increased indicated burning velocity to improvements in Nox emissions. This correlation exists for oxygenated fuels, but is not noticeable for the BASE fuel.

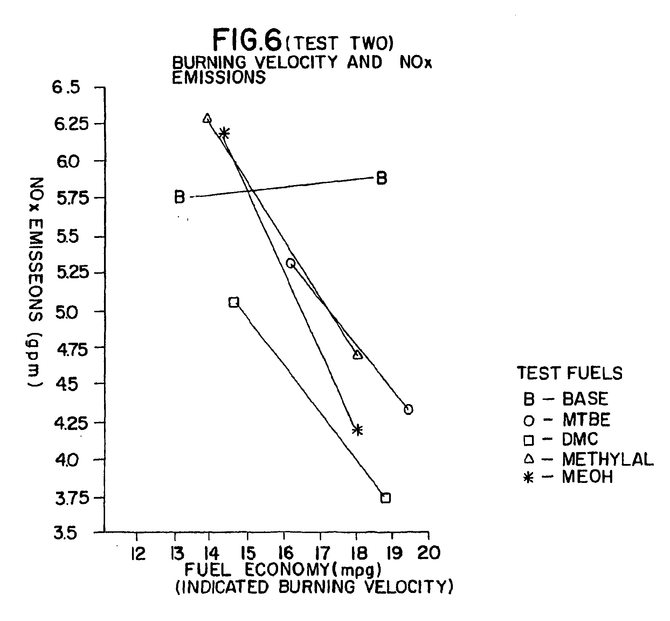

Figure 6 is particularly noteworthy because it shows the sensitivity of the oxygenated ECS fuels to changes in NOx emissions as a function to changes in burning velocity. It is noted that all fuels indicate a positive correlation to improvements in Nox's as a function of increased burning velocity, except the base fuel, which appears to be unchanged. The sensitivities of the ECS oxygenated fuels appear to be very high, with methanol again having a slightly higher degree of sensitivity than the others.

### SUMMARY OF FIGURE 1-6

The figures clearly show that reductions in combustion temperature operate to reduce emissions. The figures show that the combined reduction in combustion temperatures and increases in burning velocities control adverse emissions. The figures show that after reaching a threshold load of approximately 11.03 ikW (15 ihp) the benefits of Applicant's invention are most profound.

### FIGURE 7

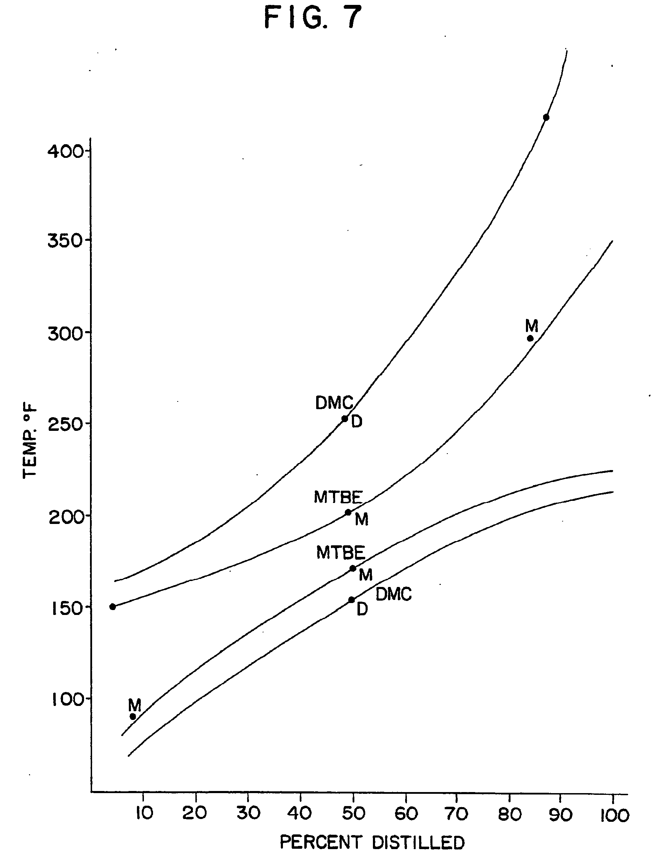

Figure 7 shows different distillation curves due to inclusion of MTBE/oxygenates and modification of mid-range and end-range fractions to improve combustion of MTBE/Mn fuels. Fig. 7 shows a middle distillation region (known as "Technical Enleanment Region") of an MTBE/oxygen fuel with impaired warm driveability. It shows a corrected mid range to avoid impair driveability, and end region for fuel containing MMT at 0.008 g Mn/l (1/32 gr mn), wherein T-90 temperatures are reduced.

Figure 7 shows optimal T-10, T-90 and T-50 distillation temperature for 1.5% to 2.7% 02 weight of DMC and MTBE fuels containing 0.008 g Mn/l (1/32 gr. Mn/gal) of MMT, which do not debilitate OBD II catalyst monitors. Fig. 7 shows that DMC generally has a much broader range of T-10, T-50, and T-90 temperatures. For example, DHC's T-90 upper range is 227.8°C (410°F), while MTBE's T-90 upper range is generally less than 152.8 °C (275°F).

T-50's are equally broad for DMC compared to MTBE, DMC's T-50's range is from 121.1°C (250°F) to 65.6°C (150°F), while MTBE's range is from 93.3°C (200°F) to 82.2°C (180°F). T-10's show no lower limit for DMC, but MTBE at 26.7°C (80°F).

### GASOLINE COMPOSITIONS

Automotive gasolines contemplated in Applicant's invention include conventional unleaded, reformulated unleaded, low RVP fuels, and the like. Non-limiting examples of the gasoline engine/fuel systems include, carburetor, improved gasoline, manifold feed/injected, direct injection, direct injected stratified charge, advanced stratified charge, and the like. It is contemplated that Applicant's automotive gasolines will be in combustion systems employing exhaust catalysts (including three way systems), regulated emission control systems, and the like.

One of the particular objects of Applicant's invention is the incorporation of emission catalysts, OBD II catalyst efficiency monitors, related emission control systems in methods, where upon their operation in the presence of a Mn containing combustion exhaust gas, is not impaired.

Another object is the operation of gasoline engines operating under minimum threshold loads, where upon the benefits of Applicant's invention become beneficial. For example, Applicant has discovered that when employing ECS compounds and minor amounts of metallic, e.g. Mn, that optimum fuel economy and temperature reduces do not start to occur until loads are at least 9.19 ikw (12.5 ihp) to 11.77 ikw (16.0 ihp).

Applicant's gasolines should be constructed to minimize hazardous pollutants to the maximum extent possible. Thus, sulfur concentrations should approach sulfur free levels, if possible, harmful heavy aromatics (while their effect is substantially mitigated in the practice of this invention) should be reduced as much as practical. To the extent possible, co-fuels should be formulated to reduce volatile organic compounds (VOC's), NOx, benzene, butadiene, formaldehyde, acetaldehyde, polycyclic organic material. Reformulated gasolines constructed under the complex model are expressly contemplated.

An important embodiment of Applicant's invention is its capacity towards ultra clean combustion emissions, due to the nature of its combustion. Consequently, in addition to the reduction of most hazardous emissions, it is an embodiment to avoid combustion chamber deposits, which now be caused by the use of detergents to keep intake valves clean.

An additional embodiment is the reduction of PM 10, which is believed to be caused by heavier aromatics. Applicant's invention is effective to reducing such particulate matter, again due to the unique combustion that is occurring.

### Example 11

A method of operation an internal gasoline combustion engine, said method comprising: mixing a convention, non-convention, or reformulated gasoline with a combustion improving amount of an ECS compound and a combustion improving amount of MMT and/or other metallic; combusting said fuel in said engine, wherein engine is under load of at least 9,19 ikW (12.5 ihp) (more preferably 11,77 ikW (16.0 ihp)), wherein fuel economy is increased.

### Example 12

The method of 11, wherein the load is approximately 14,71 ikW (20 ihp) and fuel economies are improved 5% to 30% and/or combustion temperature is reduced 27,8°C(50°F) to 55.6°C (100°F).

### Example 13

The method of 11, wherein said fuel contains oxygen by weight of 0.05% to 3.7%, supplied by MTBE, ETBE, DMC methanol, ethanol, or methylal, or mixture, and 0.004 g Mn/l to 0.066 g Mn/l (1/64 to 1/4 gram Mn/gal) of MMT; and wherein engine is operated at load exceeding 11.77 ikW (16 ihp); whereby fuel economy is improved and/or combustion temperatures are reduced.

Another object of instant invention is improving burning velocity/combustion temperatures by modifying T-90 and/or end-boiling point distillation fractions enhancing combustion, improving mileage, driveability and/or reducing hazardous combustion emissions.

Still another object is improving combustion by controlling mid-range distillation temperatures. Still another is T-10 adjustment to enhance the properties of this invention.

RVP reductions are contemplated and it is preferred that Applicant's gasolines generally be lower RVP fuels 27,56 (4.0) to 82.68 kPa (12.0 psi), more preferred are those 27,56 (4.0) to 62,01 kPa (9.0 psi), 27,56 (4.0) to 55.12 kPa, (8.0 psi), 27.56 (4..0) to 51.68 kPa, (7.5 psi), 41.34 (6.0) to 48,23 kPa (7.0 psi), 41,34 (6.0) to 44.79 kPa, (6.5 psi), 6.89 (1.0) to 41.34 kPa (6.0 psi), 6,89 (1.0) to 20,67 kPa, (3.0 psi), 6.89 (1.0) to 13.78 kPa (2.0 psi), or lower. Contemplated RVP include 44.10 (6.4), 47.54 (6.9), 48.23 (7.0), 48.92 (7.1), 49.61(7.2) (max), 50.30 (7.3) (max), 50.99 (7.4) (max), 57.19 (8.3) (max), 53,74 (7.8), 54.43 (7.9), 55.12, (8.0), 55.81 (8.1) (max), 56.50 (8.2) (max), 57.19 (8.3) (max)

As noted, a principal object of this invention is combustion temperature reduction. It is reported that gasoline's combustion temperature is 2102°C (J.B. Fenn "Fourth Symposium on Combustion," Baltimore, p 231 (1953). Thus, it expressly contemplated that one or more of the means herein cause the reduction of combustion temperatures by at least 13,9°C (25°F), 27,8°C(50°F), 55,6°C(100**°**F), 69,5°C(125°F), 83,3°C(150°F), 111,1°C(200°F) 138,9°C(250°F), 166,7°C(300°F), 194,5°C(350°F), 222,2°C(400°F), or more.

In the T-10, T50, T-90 temperature reducing or control practices of this invention eliminating gasoline components having low latent heats of evaporation and/or low burning velocities is express contemplated.

It is desireable that high boiling components with latent heats of vaporization of 349.05 kJ/kg (150 btu/lb) or 239.94 kJ/l (860 btu/gal), and lower, be reduced or removed from the gasoline composition, when practical.

It is preferred the finished hydrocarbon portion of the gasoline composition (e.g. absent oxygenates and metals, etc.) have an average latent heat of vaporization greater than 349.05 kJ/kg (150 btu/lb) or 239.94 kJ/l (860 btu/gal). It is more preferred that it be 372.32 395.59 418.86 kJ/kg (160, 170, 180 btu/lb), if practical.

Applicant has discovered modification leading to a higher latent heat of evaporization can be normally be accomplished absent losses in the fuel's heating. Often, heating values increase.

The preferred practice is removal of higher boiling material (with low latent heats of vaporization and/or low burning velocity) until said oxygen/metals free hydrocarbon composition has an average latent heat of vaporization equal or greater than 245.52(880), 248.31(890), 251.5(900), 252.50(905), 253.89(910), 255.29(915), 256.68(920), 258,08(925), 259,47(930), 262,26(940), 265,05(950), 270,63(970), 276,21(990), 279(1000), 292,95(1050), 306,9(1100), 334,8 kJ/l (1200 btu/gal). It is desireable that it be greater than 251,1-253,89 kJ/l (900-910 btu/gal), or more. 258,08 jK/l (920 btu/lb) being even more preferred. While there is no upper limit to said base (co-fuel's) composition's latent heat of vaporization, economic costs and other practical considerations will control.

Alternatively, it is acceptable that reductions of end point and/or T-90 temperatures be in such an amount that the average latent heat of evaporization of the adjusted fuel (e.g. the reduced fuel), such that its latent heat of vaporization is 0.5% to 10.0%, or greater, than the unadjusted base fuel. Increases of 1.0% to 20%, 40%, or greater are also desireable.

In conventional fuels it is generally preferred that minimum increases in average latent heat of vaporization due to reductions of end/T-90 temperatures and/or due to control of T-50, T-10 temperature (absent use of an ECS compound or azeotroping co-solvent, etc.), be such that addition of 1/32 gram mn/gal of MMT improves fuel economy of same MMT containing fuel unadjusted for T-90. In such circumstances T-90 reduction normally requires a minimum of a 27,8°C (50oF) variance between adjusted and unadjusted fuels.

Applicant has discovered that acceptable T-90 temperatures will range from 115,6°C, 121,1°C, 123,9°C, 126,7°C, (240°F, 250°F, 255°F, 260°F, 129,4°C, 132,2°C, 135°C, 136,7°C 137,8°C, 140,6°C, 143,3°C, 146,1°C, 148,9 °C, 265°F, 270°F, 275°F, 278°F, 280°F, 285°F, 290°F, 295°F, 300°F, 151,7°C, 154,4°C, 157,2 °C, 160°C, 162,8°C, 165,5°C, 168,3°C, 171,1°C, 173,9°C 305°F, 310°F, 315°, 320°F, 325°F, 330°F, 335°F, 340°F, 345°). Temperatures outside these ranges are also contemplated. However temperatures below 137.8°C (280°F) are preferred, normally.

Final temperature is function of improved latent heat of vaporization and/or improved combustion velocities, elicited by the reduction, which in turn is dependent upon the base fuel. Modifying differing fuels (and hydrocarbon streams) will elicit differing response. Thus, variability in actual amount of T-90 reduction is anticipated.

### Example 14

A conventional or reformulated gasoline composition wherein higher boiling point fuel fraction is cut such that end point and/or T-90 boiling temperatures of the gasoline are reduced; whereby the cut clear fuel's average latent heat of vaporization is at least 0.5% and more preferably 1.5%, or greater, than the clear uncut fuel.

### Example 15

The method of 14 wherein the inclusion of 0.008 g Mn/l (1/32 gr Mn/gal) of MMT shows increase in the cut composition's fuel economy when compared to uncut fuel (inclusive metallic).

### Example 16

The method of 14, wherein the cut fuel containing metallic is combusted and exhausted through an exhaust catalyst wherein an OBD-II catalyst monitor is employed; whereby manganese oxide deposition on catalyst wash coat are sufficiently controlled that said catalyst monitor does not fail.

### Example 17

The method of 14-16, wherein an oxygenated ECS compound is added at 0.5% to 2.7%, 3.0%, 3.5% oxygen to the base fuel, and wherein the resultant T-50 temperature exceeds 68.3°C (155°F), 76,7°C (170°F) 79,4°C (175°F) desireable) but is less than 104,4 °C (220°F) and whereby T-90 temperature absent the presence of the oxygenate does not exceed 148.9°C (300°F), and more preferably less than 137.8°C (260°F), 135°C (275°F); 132.2°(270°F) and wherein after combustion and emissions are exhausted through an exhaust catalyst where an OBD-II catalyst monitor is employed; manganese oxide deposition upon catalyst wash coat is sufficiently controlled (or virtually non-existent) that said monitor does not fail.

### Example 18

The example of 17, wherein said adjusted and unadjusted gasolines both comprise 1.0% to 2.0% oxygen by wt of MTBE and a cyclomatic manganese tricarbonyl having a Mn concentration from 0.000264 to 0.008 g Mn/l (0.001 to 0.03125 gr. mn/gal), such that fuel economy of the reduced boiling temperature fuel is improved over the unadjusted fuel.

### Example 19

The example of 14, wherein T-90 temperatures of the adjusted reformulated fuel is approximately 126,7°C to 137,8°C (260°F to 280°F), or less.

### Example 20

The example of 18-19, wherein MTBE is replaced in whole or part by dimethyl carbonate.

Limitations on olefins are desireable to reduce smog. Furthermore, limitation on Reid Vapor Pressures (RVP) to for example less than 55,12 51,68, 48,23, 46,85, 44,79, 42,72, 41,34, 39,96, 38,58 kPa (8.0, 7.5, 7.0, 6.8, 6.5, 6.2, 6.0, 5.8, 5.6 PSI) or less and sulphur concentrations to less than 0.002 wt % (including sulfur free compositions), and naphtenes at less than 7% (or less than 0.5%, if practical) by volume are contemplated.

In the practice of this invention it is contemplated that gasoline fuels include those generally meeting ASTM D 4814 and related specifications, EPA's simple and complex model reformulated gasoline ("RFG") specifications under Clean Air Act 42 USC 7545 § 211 (k), RFG certifying standards (incorporated by reference), EPA certification specifications under 42 USC 7525 § 206, any other legal or industry standard, existing and future.

Thus, it is an embodiment that Applicant's compositions meet current and all future CAA and/or EPA environmental/emission standards, including compositional and performance standards.

Emissions of some concern to those in the art are volatile organic compounds ("VOC's), which contribute to low altitude ozone formation. VOC's are mostly emitted from the evaporative emissions. Exhaust VOC's attribute to a very minor portion of VOC emissions.

Emissions of principle concern include toxic and NOx emissions. Within the context of this invention, said VOC, toxic, NOx and other regulated emissions are defined in accordance with EPA definitions.

However, an emission of paramount concern is toxic emissions, which this invention unexpectedly reduces, on a mass basis, on the order of 5%, or more, over conventional and other reformulated gasolines. This is a most unexpected development. For example, it has been found that the levels of 1,3-butadiene (a regulated toxic) increase in the presence of MTBE when reducing olefins and T-90. temperatures. Furthermore, it has been found that formaldehyde exhaust emission actually increase when aromatics are reduced and/or when MTBE is added. Additionally, it has been found that acetaldehyde emissions also increase as aromatics are reduced.

For example, it has been found that by increasing the percent of MTBE from 0% to 15% by volume that formaldehyde emission increased 26%. By reducing aromatics from 45% to 20%, 1,3-butadiene increased 11%, and formaldehyde increased 23%, and acetaldehyde increased 19%.

This is most unfortunate, because in order to meet the requirements under the complex model, refiners must include an oxygenate, MTBE being the most preferred by refiners, and they are additionally required to reduce aromatic emissions. Thus, there is a substantial need to reduce aromatics and/or olefins in the presence of MTBE, absent attendant increases in toxic emissions.

Unfortunately, under the current specifications which require MTBE's presence, fuel economies suffer. Applicant has discovered that introducing MMT while simultaneously reducing end boiling and/or T-90 temperatures, in the manner described herein, Applicant is able to unexpected improve fuel economy.

Applicant has also discovered that employing MMT at greater than 0.008 g Mn/l (1/32 gr. mn/gal) improves fuel economy when MTBE concentrations are greater than 2.0% 02 by wt (e.g. 2.7% 02 wt).

However, fuel economies appear to suffer in the presence of MTBE at 02 weight concentrations of less than 2.0% wt (e.g. 1.0%) even with 0.008 g Mn/l (1/32 gram Mn/gal) of MMT. Applicant has discovered that this phenomena to be correlated to T-90 temperatures.

Applicant has found that if T-90 temperatures are not sufficiently reduced (so as to increase the average latent heat of vaporization of the fuel) and/or where an additional enhanced ECS chemistry such as DMC is not present, a 1.0% to 2.0% 02 wt MTBE and MMT of 0.008 g Mn/l (1/32 gr mn/gal) (or less) combination in a reformulated fuel will suffer lose in fuel economy, compared to the based gasoline absent the oxygenate (with or with out MMT).

Thus, it is a preferred embodiment to employ MTBE at 02 concentrations greater than 2.0% weight. If MMT is employed at 0.008 g Mn/l (1/32 g Mn/gal) or less, it is expressly preferred that T-90 temperatures be reduced to less than 160°C (320°F), 148,9°C (300°F), with 137.8°C (280°F) being preferred.

Quite unexpectedly, when employing Applicant's invention, namely a combustion improving amount of Mn in the presence of a combustion improving/temperature reducing ECS compound and/or reduction of T-90 temperatures, the expected reduction in fuel economy is not experienced. To the contrary fuel economy may actually increase. The expected increase of toxic pollutants is also abated.

Applicant has further discovered that substituting DMC for MTBE and/or by combining DMC with MTBE, particularly at 02 wt concentrations of 2.0%, or higher, the substitution unexpectedly operates to further increase mileage and improve emissions.

Thus, it is an embodiment of this invention to employ gasolines with reduced aromatic contents, e.g. amounts ranging from 5% to 35% by volume. However, concentrations closer to 20%, 15%, or less are more preferred. Also preferred are reduced concentrations of olefins (e.g. 5% to 10%, less than 8%, 6%, 5% preferred), and especially in fuel fractions with reduced T-90 temperatures (preferably in the range of 148,9°C (300°F) to 126,7°C (260°F) or less).

It is contemplated to such hydrocarbon fraction would be added a combustion improving amount of Mn, an oxygenated ECS compound, particularly, MTBE, ETBE, TAME, diisopropyl ether, ethanol, and DMC, including mixtures; whereby the fuel's average latent heat of vaporization exceeded 245,52, 251,1, 253,89 kJ/l@15,6°C (880, 900, 910 BTU/lb @ 60°F); and whereby subsequent to combustion results in fuel economy improvements and reduced toxic emissions including NOx, HC's, 1,3-butadiene, formaldehyde, and/or acetaldehyde.

Applicant has discovered that it is desireable to reduce MBT spark advances to assure smooth operation, especially as his higher burning velocity gasolines are employed in constant compression ratio engines. With greater increases in burning velocity, greater spark advance decreases are preferred. Acceptable MBT spark advance decreases range from 1.0%, 1.5%, 2.0%, 2.5%, 3.0%, 3.5%, 4.0%, 4.5%, 5.0%, 5.5%, 6.0%, 6.5%, 7.0%, 7.5%, 8%, 8.5%, 9%, 9.5%, 10% 10.5%, 11.0%, 11.5%, 12.0%, 12.5%, 13.0%, 13.5% to 40.0%. Decreases over 0.5%, 2.0%, 5.0% to 10% are more desirable.

Applicant has also discovered that optimum compression ratios due to increased burning velocities and prolonged combustion are those of 8.5:1 to approximately 13.0:1, when for example a 2% 02 by weight DMC and 0.0165 g Mn/l (1/16 gr. Mn/gal) MMT gasoline composition are employed. With this combination the more preferred is ratios are 9.5:1 to 12.5:1, with 11.5:1 to 12.5:1 being slightly more preferred. A compression ratio of 10.5:1 is very satisfactory as well and is regarded as preferred. Higher concentrations of a ECS fuel comprised of DMC and appropriate concentrations of a metallic lend themselves to higher compression ratios.

### Example 21

A novel method of operating an engine comprising: mixing an unleaded gasoline wherein the XTBE represents 2.0% oxygen by weight and MMT is included at 0.008 g Mn/l (1/32 gr Mn/gal); combusting said fuel in an engine wherein MBT spark advance has been retarded approximately 1.0% to 2.5% (1.5% preferred); whereby operation of said engine improves thermal efficiency and/or emissions.

### Example 22

A novel method of operating an engine comprising: mixing an unleaded gasoline wherein DMC represents 2.0% oxygen by weight and MMT is included at 0.008 g Mn/l (1/32 gr Mn/gal); combusting said fuel in an engine wherein NBT spark advance has been retarded approximately 2.0% to 10% (8.5% preferred); whereby operation of said engine improves thermal efficiency and/or emissions.

### Example 23

An unleaded, phosphorus free, reformulated gasoline composition having a max of 48,23 kPa (7.0 psi) RVP, a max of 5.0% vol olefins, a max of 20% vol aromatics (preferably 15%, 10%, or lower), a max of 0.8% benzene (preferably 0.6%, or lower, or benzene free), a max of 100 ppm sulfur (preferably 50 ppm or less or sulfur free), an O2 concentration ranging from 1.8% to 2.2%, 2.0% to 2.7%, or 3.5% 02 wt of dimethyl carbonate, MTBE, ETBE, TAME, ethyl tertiary amyl ether, diisopropyl ether or ethanol, or mixture, a cyclomatic manganese tricarbonyl compound at 0.004 g Mn/l to 0.05 g Mn/l (1/64 to 3/16 gr. Mn/gal) (1/32 gr mn/gal preferred), a max T-90 temperature of 126.7°C (260°F) to 137.8°C (280°F) or less, a T-50 temperature of approx. 71,1°C (160°F) to 110°C (230°F) (76,7°C to 96,1°C), ((170°F to 205°F))., a bromine number of 20 or less; an average latent heat of vaporization of 253,89 to 259,47 kJ/l (910 to 930 BTU/gal) or more.

### Example 24

The Example of 21-23, wherein the fuel contains an ashless dispersant, induction control/deposit control additive in conformity with § 211 (1) and appropriate regulations of the Clean Air Act; and optionally containing a minor amount of a co-solvent to enhance water solubility, such as hexanol.

### Example 25

The examples of 21-23, wherein the fuel's T-90 temperature is no greater than 148.9°C (300°F), preferably 137.8°C (280°F), or less, T-50 temperature after inclusion of MTBE at 2.0% to 2.7% is greater than 76.7 °C (170°F) but less than approximately 93.3°C (200°F); whereby warm weather driveability does not suffer; and wherein the fuel's latent heat of evaporation is greater than 251.1 kJ/l (900 btu/gal), more preferably 252,5 kJ/l (905 btu/gal), and the Mn concentration, is 0.008 g Mn/l (1/32 gal); whereby said combustion of said fuel does not contribute to the failure of OBD-II catalyst oxygen sensors.

### Example 26

A method for avoiding the failure of OBD-II exhaust gas oxygen sensor; said reducing T-90 of target gasoline whereby result fuel's average latent heat of vaporization is increased an amount sufficient to reduce combustion temperature by at least 8.3°C (15°F) or more and/or to measurably increase average burning velocity as measured by a laminar bunsen burner; combining said fuel with MTBE at 1.2% to 2.7% weight; whereby the composition's T-50 temperature is at least 76.7°C (170°F) (preferably greater than 79.4°C (175°F) and less than 98.9°C (210°F), 93.3°C (200°F)); combusting said fuel in an engine and emitting the resultant exhaust for an extended period through a three-way exhaust catalyst system equipped with an ODB-11 catalyst efficiency monitor; whereby manganese deposition upon the catalyst wash coat is insufficient to cause the failure of said sensors.

### Example 27

The method of 26, said fuel's T-90 temperatures are approximately 148,9°C (300°F), and more preferably approximately 137,8°C (280°F) or less, and/or wherein the measurable increase in burning velocity was at least 1.0%, or greater, than the unadjusted fuel.

### Example 28

The methods of 25-27, wherein the fuel is absent the oxygenated compound.

### Example 29

The method of examples 28, wherein engine operation is for a period of 5,000; 20,000; 50,000; 75,000; or 100,000 miles

### Example 30

The Examples of 14-29, wherein the average burning velocity of the composition as measured in a laminar bunsen burner at ambient conditions is greater than 46, 48 cm/see, more preferably 50 ca/sec or greater (using methanol at 57.2 cm/sec as bench mark).

### Example 31

The Example of 14-30, wherein the particle size of the fuel injected into the combustion chamber is less than 70 microns, more preferably less than 50 microns.

### Example 32

The Example of 14-30, wherein the injected fuel particle has an approximate injected pressure of approximately 103,35 to 310,05 kPa (15 to 45 psi).

### Example 33

The example of 14-29, wherein the temperature of combustion is sufficiently reduced that under for example a load of 14.71 ikW (20 indicated horse power) exhaust gas temperatures are reduced by at least 5.6°C (10°F) to 27.8°C(50°F) (or more), whereby the average exhaust gas temperature entering the exhaust gas inlet is less than 760°C (1400°F) (or such other temperature that manganese oxide coating of the catalyst wash coat does not appreciably occur).

### Example 34

The examples of 14-29 wherein reduced temperature engine exhaust gases are vented through an exhaust emissions catalyst and the emission system's onboard catalyst monitoring does not fail due to false catalyst oxygen storage capacity readings.

### Example 35

The examples of 14-29, wherein such method qualifies for an EPA waiver under § 211 (k) of the Clean Air Act.

### Example 36

A low toxic fuel economy improving composition comprising an unleaded fuel composition comprising phosphorus free hydrocarbons, having a max of 55.12, 48.23, 44,79, or 41.34 kPa (8.0, 7.0, 6.5, or 6.0 psi) RVP; a max of 6.0%, 5.0% vol olefins, a max of 25%, 20% vol aromatics (preferably 15%, 10%, or lover), a max of 0.8% benzene (lower or benzene free) a max of 40 ppm sulfur (lower or sulfur free), a total 02 concentration ranging of 1.0 to 2.7% wt or 3.5% 02 wt of dimethyl carbonate, MTBE, ETBE, TAME, or ethanol, a cyclomatic manganese tricarbonyl compound at 0.004g Mn/l to 0.05 g Mn/l (1/64 to 3/16 gr. Mn/gal) (preferably 0.008 g Mn/l 1/32 gr. Mn), a max T-90 temperature of 148.9°C (300°F), 137,8°C (280°F) (preferred), a T-50 temperature of approx. 76.7°C(170°F) to 110°C(230°F)., a minimum (R+M)/2 octane of 87, a bromine number of 20 or less, an average latent heat of vaporization of 251,1 253,89, 256,68 or more kJ/l at 15,6 °C (900, 910, 920 or more BTU/gal at 60°F); a heating value greater than 29574 kJ/l at 15.6 °C (106,000 btu/gal at 60°F)(more preferably greater than 30132, 31806 kJ/l (108,000, 114,000 btu/gal)); whereby toxic emissions of 1,3-butadiene, formaldehyde, or acetaldehyde emissions are reduced and/or fuel economy is improved.

### Example 37

The Example of 36, wherein the oxygenate is MTBE at 2.0% wt and the average latent heat of vaporization of the fuel exceeds 251.1 kJ/l @15.6°C (900 BTU/gal @ 60°F) and is preferably greater than 252.5 kJ/l @ 15.6 °C (905 BTU/gal @ 60°F); MMT concentration is 0.008g Mn/l (1/32 gr./gal); and average heating value of the composition exceeds 29574 kJ/l at 15.6°C (106,000 btu/gal at 60°F); has an average laminar burning velocity of at ambient conditions greater than 48 cm/sec.

### Example 38

The MTBE composition of example 37, wherein the MMT concentration is greater than 0.008 g Mn/l (1/32 gr mn/gal).

### Example 39

The examples above, wherein the oxygenate is DMC and the MMT concentration is greater than 0.008 g Mn/l (1/32 gr mn/gal).

### Example 40

The composition of examples 23, 36, wherein RVP is 46.86, 44.79, 41.34, 37.90 kPa (6.8, 6.5, 6.0, 5.5 psi) or lower.

In the practice of this invention, in view of reducing regulated emissions, preferred gasoline compositions include, but are not limited to those which have the following specifications:

**TABLE 1 LEAD FREE FUELS**

| | A | B | C |
|---|---|---|---|
| Reid Vapor Pressure (max kPa (psi)) | 59,94 (8.7) | 48,23 (7.0) | 20,67-41,34 (3.0-6.0) |
| Olefin (max volume %) | 9.2 | 8.0 | 0.0-8.0 |
| Aromatics (max volume %) | 32.0 | 20.0-25.0 | 0.0-10.0 |
| Benzene (max volume %) | 1.5 | 1.0 | 0.0-0.5 |
| Sulphur (max parts/million) | 339 | 100 | 0.0-10 |
| Oxygen (weight %) | 0.0 | 2.0-2.7 | 2.0-5.0 |
| T-90 (Max temperature °C (°F) | 165.6 (330.0) | 160 (320.0) | 148.9-165.6 (300-330) |
| (R & M)/2 (min) | 87.0 | 87.0 | 87.0-95.0 |

### Example 41

The fuels of B and C of TABLE 1 above, wherein 1) said fuels contain Applicant's oxygenated means and a 2) combustion improving amount of manganese, and 3) wherein the combined evaporative emissions of said fuels' storage and its delivery to a combustion chamber, and emitted atmospheric combustion emissions, are 4) such that in the year 1995 said fuel's volatile organic compound emissions and toxic air pollutants, on a mass basis, are 15% lower than the baseline gasoline as defined under § 211 (k) of the Clean Air Act, and are 5) such that in the year 2000 said fuel's volatile organic compound emissions and toxic air pollutants, on a mass basis, are 25% lower than said baseline gasoline.

### Example 42

An unleaded, phosphorus free, reformulated gasoline composition fuels having a max of 55.12 49.61, 48.23, 44.79 kPa (8.0, 7.2, 7.0, 6.5 psi) RVP, a max of 8.0%, 6.0% vol olefins, a max of 20-25% vol aromatics, a max of 1%, 0.8% benzene (preferably less), a max of 300-40 ppm sulfur (preferably lower or sulphur free), an 02 concentration ranging from 2.0 to 2.7% wt or 3.5% 02 by weight of dimethyl carbonate, a cyclomatic manganese tricarbonyl compound or mixture at 0.004 g Mn/l to 0.05 g Mn/l (1/64 to 3/16 gr. Mn/gal.) (preferably greater than 0.008 g Mn/l (1/32 gr/gal), a max T-90 temperature of 148.9 °C to 160 °C (300°F to 320°F) (preferably 137.8°C (280°F) or lower), a preferred T-50 temperature of approx. 76.7°C to 104.4°C (170°F to 220°F); a minimum latent heat of vaporization of 251.1 252.5 kJ/l @15.6°C (900, 905 BTU/gal @ 60°F) (preferably greater than 256,68 kJ/l@15,6°C (920 BTU/gal @ 60°F)); a minimum heating value of the composition assuming 2.0% O2 weight of 29574 kJ/l@15,6°C (106,000 BTU/gal @ 60°F), and a minimum average laminar burning velocity at ambient conditions of 48 cm/sec (50 to 52 cm/sec or more preferred).

### Example 43

The above example wherein the composition additionally contains deposit control additives in conformity with § 211 (1) and related sections/regulations of the Clean Air Act.

### Example 44

Example 42, wherein the composition optionally contains at least one C4 to C6 alcohol or other additive assuring hydroscopic stability (water solubility).

### Example 45

The examples of 11-44, wherein the fuel infection system injects a fuel vapor under acceptable pressure into a combustion chamber, wherein average vapor particle sizes are less than 60 microns, wherein an EGR system, an onboard oxygen sensor, and injection sensors are employed; whereby fuel economy is improved by at least 2%.

### Example 46

The examples of 11-44, wherein the fuel injection system injects a fuel vapor under optimum pressure into a combustion chamber, wherein average vapor particle sizes are 10, 20, 30, or 40, wherein a turbocharger, EGR system, an onboard oxygen sensor, and injection sensors are simultaneously employed; whereby fuel economy is improved by at least 2%.

### Example 47

The examples of 21,22,26, wherein the combustion chamber is designed to increase turbulent burning velocity.

### Example 48

The examples of 42, wherein the combustion chamber is designed to increase turbulent burning velocity, and wherein the compression ratio is 2.0:1 to 6.5:1; 7.5:1, 8.0:1, 8.5:1; 9.0:1; 9.5:1, 10:1, 10.5:1, 11.0:1, and more preferable 11.5:1.

### Example 49

The examples of 22,42, wherein dimethyl carbonate is employed and the compression ratio ranges from 9.5:1 to 12.5:1.

### Example 50

The examples of 21, 22, 26, wherein the combustion chamber is designed to increase turbulent burning velocity, and wherein the compression ratio exceeds 17:1.

### Example 51

The examples of 21,22,26, wherein the combustion system operates in conjunction with a regulated exhaust/emission control system employing an emission catalyst and an on-board oxygen sensor.

### Example 52

A method of operation, wherein at least 30% of the U.S. automotive fleet operates on said fuels, whereby total reference concentrations of air borne manganese emitted from such operation, does not exceed 0.05 ug/m³ or EPA standards, which ever is lower.

Applicant's gasoline compositions expressly contemplate reductions in emissions and compositional characteristics as set forth in Tables 2 and 3, below.

**TABLE 2 COMPLEX MODEL STANDARDS FOR RFG**

| | PHASE 1 | PHASE 2 |
|---|---|---|
| PROPERTIES | 1995 | 2000 and after |
| | | |

| VOC REDUCTION (%)/GAL(1) | | |
|---|---|---|
| | | |
| Class B | 35.1 | 27.5 |
| Class C | 15.6 | 25.9 |

| NOx REDUCTION (%)(1) | | |
|---|---|---|
| | | |
| Summer | 0-1.5 | 5.5-6.8 |
| Winter | 0-1.5 | 0-1.5 |
| | | |
| TOXICS REDUCTION(1) | 15.0-16.5 | 20.0-21.5 |
| | | |
| OXYGEN (WT%) | 2.0-2.1 | 2.0-2.1 |
| | | |
| BENZENE (vol%) | 0.0-1.0 | 0.0-1.0 |

| | | |
|---|---|---|
| Note 1 Reductions are from the baseline gasoline defined under § 211 (k) (10) (B) | | |

**TABLE 3**

| **EXAMPLE FUELS COMPLYING WITH CLASS C RFG REGULATIONS** | | |
|---|---|---|
| PROPERTIES | PHASE 1 | PHASE 2 |
| | 1995-2000 | 2000 and After |
| REDUCTION % (1) | | |
| VOC'S | 17.3 | 27.6 |
| NOx | 1.6 | 6.9 |
| TOXICS | 25.4 | 27.6 |

| PROPERTIES | | |
|---|---|---|
| kPa | | |
| RVP ((psi)) | 55.12(8.0) | 45,47 (6.6) |
| OXYGEN (WT%) (2) | 2.1 | 2.1 |
| AROMATICS (VOL%) | 25.0 | 24.0 |
| BENZENE (VOL%) | 0.95 | 0.95 |
| OLEFINS (VOL%) | 9.2 | 9.2 |
| SULPHUR (ppm) | 339 | 185 |
| E200 | 41.0 | 45.0 |
| E300 | 83.0 | 87.0 |
| Manganese | | |
| (Gr. Mn/g)(3) | 1/32 | 1/32 |

| | | |
|---|---|---|
| Note 1 Reductions are from the baseline gasoline defined under 5 211 (k) (10) (B) Note 2 In the form of dimethyl carbonate. Note 3 Manganese concentrations may range from 0.004 g Mn/l to 0.066 g Mn/l (1/64 to 1/4 gr. Mn/gal) | | |

In the practice of this invention, when formulating gasoline compositions to meet RFG standards, tailoring may be required. It has been found that various components, which have the largest effect in reducing specific target emissions may be tailored:
VOC's: RVP, Aromatics, Sulphur
NOx: Sulphur, Aromatics, Olefins; and
Toxics: Benzene, Aromatics, oxygen

In the practice of this invention ECS oxygenates with methyl groups, such as methanol, diMethyl carbonate, MTBE and TAME, and the like, appears to have slightly better capability of reducing toxic emissions than do those with ethyl groups, such as ethanol, ETBE, etc.

In the formulation of conventual or RFG fuels, reductions in Reid vapor Pressure (RVP) have significant effect in reducing VOC emissions. In the practice of this invention, Reid vapor Pressure ("RVP") reductions of the resultant fuel composition to 48.23, 44.79, 41.34, 37.90, 34.45, 31.01 kPa (7.0, 6.5, 6.0, 5.5, 5.0, 4.5 psi), or lower, are preferred.

RVP is the strongest predictor of evaporative VOC emissions and RVP reductions represents the best means of reducing evaporative VOC emissions, on a mass basis, as defined by EPA. For example, a reduction of RVP from 59,94 kPa to 44,79 kPa (8.7 psi to 6.5 psi) reduces (on a mass basis) VOC emissions approximately 23%, reduces toxic emissions about 4%, and reduces NOx emissions about 0.5%.

Oxygen increases in the fuel strongly reduce toxic emissions. It appears that there is a linear relationship to weight increases in oxygen content and reductions in toxic emissions. Increases in 02 content appears to be one of the strongest predictors of reducing toxic emissions. For example, an increase of 02 from 0% to 3.5 wt% reduces toxic emissions about 11%.

Reformulated fuel regulations recognized that 02 concentrations above 2.7% weight, particularly MTBE directly increased NOx emissions. Applicant has quite unexpectedly discovered in the practice of his invention that 02 wt % concentrations above 2.7% wt. are quite able to control expected NOx increases. This is illustrated in Figure 6, which shows that burning velocity increases of oxygenated fuels including 02 content as high as 4.2% (methanol/ethanol-NEOE fuel) had substantially reduced NOx emission as burning velocity increased. It appears this phenomena is also a function of combustion temperature. For example Figure 3 illustrates that at the low combustion temperatures, independent of 02 concentration, NOx emissions declined. If anything, higher concentrations of O2 yielding greater reductions in combustion temperature appears to be the principal agent of Applicant's invention in reducing NOx emissions. Thus, it is Applicant's preferred practice to employ at least 1.5% or greater oxygen by wt., permitting optimal combustion with Mn at 0.008 g Mn/l (1/32 gr/gal) or greater. Oxygen Concentrations below 1.5% to 2.0% do not optimize Applicant's invention.

Thus, it is possible in the practice of this invention to include appreciably higher concentrations of 02 in RFG fuel's (beyond those even permitted under current rules) to reduce NOx, toxic emissions, absent expected reductions in fuel economy and increases in NOx emissions, etc..

Thus, it is an embodiment of this invention to employ 02 concentrations greater than 2.0%, 2.1%, 2.7%, 3.5%, 4.0% or even 5%, 6%, or more, by weight.

Reductions in aromatics strongly influence reductions in toxic, voc, and NOx emissions. Reductions appear to be linear, with toxic emissions being the most significantly influenced, with reductions in toxics similar to those experienced with reductions in benzene and/or increases of 02 content. For example, a reduction of aromatics from 33% to approximately 10% vol. reduces toxic, NOx, and VOC emissions by about 17%, 7%, 6%, respectively.

A desirable RFG aromatic content, in the practice of this invention is less than 25%, 20% preferred, with 18% to 10% particularly preferred.

However, as noted above, when achieving higher burning velocities at low or lower combustion temperature as contemplated in the practice of this invention, RFG fuels who aromatic concentrations higher than those believed acceptable or even higher than those permitted by regulation, still achieve appreciable reductions in toxic and other emissions associated with aromatics.

These reductions are material, unexpected, and well beyond those otherwise achievable in the formulation of standard RFG fuels.

Accordingly, aromatic concentrations higher than those now believed unacceptable in meeting RFG emission standards may be ultimately employed, while still achieving the performance and/or emission standards imposed by law.

Reductions in benzene concentrations are believed to directly and linearly influence reductions in toxic emissions For example, a reduction of benzene from 1.5% vol to 0.5% vol reduces toxic emissions on the order of 17%. Thus, benzene reductions, like increases in 02 content, represent one of the strongest predicator for reducing toxic emissions Preferred benzene concentrations are less than 1.0% by volume with most preferred concentrations approaching 0%.

However, like aromatics, benzene concentrations higher than permitted by current regulations, can be employed in the practice of instant invention while none-the-less achieving appreciable toxic and other emissions reductions, beyond those otherwise achievable under the current formulation specifications of RFG fuels. This is again is most unexpected. Accordingly, benzene concentrations higher than those now believed acceptable in meeting RFG emission standards may ultimately be employed to meet performance and/or emission standards.

Reductions in sulfur content linearly influence reductions in. NOx, toxic, and VOC emissions (in order of their relative % emission reductions). For example, a reduction in sulfur from 340 ppm to approximately 50 ppm causes a reduction of NOx, toxic, and VOC emissions of about 11.0%, 8.5%, and 3.5%, respectively. It appears that reductions in Nox emissions are strongly influenced by reductions in sulfur content. In the practice of this invention sulfur concentrations less than 40 ppm are particularly preferred. Sulfur content 30 ppm or less (or sulphur free) is even more preferred. Again, the operation of this invention will permit environmentally acceptable NOx, Toxics, and VOC's even at sulfur concentrations higher than currently permitted under the regulations.

However, sulfur concentrations on the order of 200 ppm or more appear to be acceptable, due the increased burning velocity and reduced combustion temperatures of instant invention, which appear to inhibit sulfur's adverse NOx and Toxic emission characteristics.

Reductions in olefin concentrations below approximately 9.5% causes modest reductions in. NOx and toxic emission's, but modest increases in VOC emissions. Olefin increases above 9.2% to 9.5% show modest reductions in VOC s, but also modest increases of toxic and NOx emissions. Thus, it appears the optimal olefin concentration is about 9.2% - 9.5% volume. However, emission increases due to olefin concentrations less than or greater than 9.2% - 9.5% is not appreciable when compared to the % reductions of the same emissions due to reductions, for example, in aromatic concentrations.

Thus, reductions in olefinic content below 9.2% volume are acceptable and desireable, especially if aromatic concentrations are simultaneously reduced. In other words, olefinic reductions are desireable below 9.2% volume, if the RVP or aromatic content reduction offset increases in VOC's. Again, the accelerated burning temperature reducing operation of Applicant's invention appreciably offset such increases. Thus, olefinic contents outside regulatory compositional standards may be employed while meeting performance and emission requirements.

Reduction of E200 temperatures, or that fraction of the distillation, which boils at 93,3°C (200°F), positively reduces VOC and Toxic emissions. In other words, as the E200 temperatures reduce, or as that fraction of the fuel distillation fraction increases above approximately 41%, reductions in VOC and toxic emissions are experienced. However, an increase in NOx emissions are also experienced. As E200 fraction increases, say from 42% to 60%, VOC and toxic emissions are reduced approximately 3.0%-4.0%, but NOx emissions increase approximately 2.0%. However, significant reductions of these emissions occur non-the-less, independently of such modification.

Applicant believes too high an E200 fraction (translating into too low of a T-50 temperature) has its draw backs, as warm weather driveability is impaired when T-50 fractions are below 76.7°C (170°F), especially when 02 content is 1.0%, 2.0%, or greater. Such impaired driveability, due to difficulty in restarting engines, ect., perhaps creates more harmful emissions than the modest reductions otherwise achieved. Thus, it is an embodiment of this invention to construct Applicant's T-50 temperatures above 76,7°C, 79,4°C 82.2°C 85°C 87.8°C (170°F, 175°F, 180°F, 185°F, 190°F) where practical.

When the E300 fraction increases from 84% to 95% of the fraction, VOC and NOx emissions are modestly reduced approximately 2.0% and 0.5%, respectfully. Toxic emissions increase approximately 1.5%. The modest gains appear hardly worth the cost.

However, with the operation of Applicant's combustion improving temperature reducing means, such toxic increases are mitigated and the advantage of higher average latent heat of vaporization fuel enhances MMT.

In the practice of Applicant's invention it is expressly contemplated that the base RFG gasoline composition be tailored in a number of regards. For example, it may be tailored to eliminate virtually all polynuclear aromatics, all C10+ aromatics, such as naphthalene, pyrene, and anthracene, and the like. It may be tailored to eliminate known component toxics such as 1,3-butadiene and the like. The composition may also be tailored to reduce low burning velocity material, low latent heat of vaporization, and/or low specific heat components.

Applicant's most preferred Mn. concentrations ranges for unleaded gasolines, reformulated gasolines are above 0.008 g Mn/l, 0.0165 g Mn/l to approximately 0.1 g Mn/l (1/32 gr, 1/16 gr to approximately 3/8 gr Mn/gal). A manganese concentration of 0.008 g Mn/l (1/32 gr Mn/gal) is particularly preferred as representing one of the best antiknock values for the cost per gram of Mn. However, it is at a lower limit of acceptable environmental concentrations, if oxygenated ECS compounds are employed, especially at oxygen concentrations exceeding 2% weight.

Absent the employment of ECS oxygenated compounds, but employing for example mechanical means, such as improved atomization and/or lower combustion temperature gasolines, and the like, having for example, reduced T-90 temperatures (and/or reduced aromatics), 0.008 g Mn/l (1/32 gr Mn/gal) may be acceptable in controlling HC emission's.

While the current practice of Applicant's invention contemplates the minority usage of ECS fuels in combination with gasoline co-fuels, it is contemplated that advanced applications will include majority usage of ECS and or neat usage in gasoline applications. Thus, it is an embodiment to employ a composition containing a majority of dimethyl carbonate, a combustion improving amount of CMT, and a minority amount of a gasoline co-fuel.

Applicant's gasolines, to the extent environmental feasible, may further or alternatively contain antiknock quantities of other agents, such as cyclopentadienyl nickel nitrosyl, N-methyl aniline, N-methyl aniline, and the like. Known anti-knock promoters may be employed. 2.4 pentanedione may also be included.

The fuel should contain dispersants, detergents, emulsifiers, metal deactivators, aromatic amines, supplemental valve and valve seal recession protectants. Non-limiting examples of such additives include boron oxides, bismuth oxides, ceramic bonded CaF2, iron phosphate, tricresylphosphate, and sodium based additives, and the like.

Other additives include induction/injection system cleaning detergent/dispersant, including commercially available long-chain dibasic acid derivatives (e.g. succinimides such as HiTec 4450), long-chain aliphatic polyamines (e.g. polyisobutenyl polyamine), or long chain Mannich bases, and/or an ashless detergents, including a polyether amine, polyalkenyl amine, alkenyl succinimide, polyether amide amine, and mixture, and an antioxidant, demulsifer, emulsifer corrosion inhibitor, aromatic solvent, scavenger, diluent oil, mutual solvent, metal deactivator, and mixture.

The fuel may also contain antioxidants, non-limiting examples include, 2,6 di-tert-butylphenol ; 2,4,6-tri-tert-butylphenol ; 4-methyl-2,6 di-tert-butylphenol ; 2-tert-butylphenol, and mixtures thereof; 2,6-di-tert-butyl-p-cresol; and phenylenediamines such as N-N'-di-sec-butyl-p-phenylenediamines; N-isopropylphenylene diamine; and N,N'-disalicylidene-1, 2-propanediamine; and mixtures of tertiary butylated phenols, and/or aromatic amine antioxidants, and mixtures thereof.

It is contemplated the fuel will contain deposit control additives, non-limiting examples include polyether amine, polyalkenyl succinimide, or polyalkenyl succinimide, hydrocarbyl carbonates, such as polybutene alcohol, polybutene chloroformate, polybutene amines formulated in mineral or other carriers, polyisobutylene amine reformulated in polyether carriers, and one-component polyether amines, and the like. Several others have been set forth elsewhere in the specification and are contemplated in gasolines, and other co-fuels. Likewise these and other additives herein are also contemplated in gasolines, as well. It is contemplated the fuel may contain one or more ashless detergents, non-limiting examples including polyether amines, polyalkenyl amines, alkenyl succinimides, polyether amide amines, and the like. The fuel may contain such additives as F310, polybutene amines, aminated or polymerized detergents, and the like.

The fuel may also contain dissipation static electricity additives. It is contemplated in the practice of applicant's invention that his ECS fuel tends to reduce static electricity concerns to a certain existent. The fuel may contain corrosion inhibitors and the like.

The fuel base may contain hydrocarbons boiling outside normal gasoline fuel ranges, which are modified to acceptable gasoline ranges.

## Claims

1. A thermally efficient unleaded automotive gasoline hydrocarbon fuel composition comprising:
- a hydrocarbon base,
- an oxygenated compound selected from methanol, ethanol, methylal, dimethyl carbonate, MTBE, ETBE , and
- 0.004 to 0.066 g Mn/l (1/64 to 1/4 g Mn/gal) methyl cyclopentadienyl manganese tricarbonyl (MMT),
said gasoline fuel further being characterized as having
- a maximum T-90 temperature not exceeding 174°C (345°F),
- a minimum Bunsen burner laminar flame velocity of 46 cm/s (with methanol benchmarked at 57,2 cm/s),
- an aromatics content from 5% to 35% by volume, and
- having a sulfur content not exceeding 300 ppm.

2. The gasoline composition of claim 1, having a maximum T-90 temperature of 166°C (330°F).

3. The gasoline composition of claim 1, having a maximum T-90 temperature of 149°C (300°F).

4. The gasoline composition of claim 1, having a maximum T-90 temperature of 143°C (290°F).

5. The gasoline composition of claim 1, having a maximum T-90 temperature of 138°C (280°F).

6. The gasoline composition of claim 1, having a maximum T-90 temperature of 132°C (270°F).

7. The gasoline composition of claim 1, having a sulfur content not exceeding 100 ppm.

8. The gasoline composition of claim 1, having a sulfur content not exceeding 50 ppm.

9. The gasoline composition of claim 1, having a sulfur content not exceeding 10 ppm.

10. The gasoline composition of claim 1, having a minimum latent heat of vaporization or 251.1 kJ/l (900 BTU/gal) at 15.6°C (60°F) .

11. The gasoline composition of claim 1 having a minimum latent heat of vaporization of 252.5 kJ/l, (905 BTU/gal) at 15.6°C (60°F).

12. The gasoline composition of claim 1, having a minimum latent heat of vaporization of 253.9 kJ/l (910 BTU/gal) at 15.6°C (60°F).

13. The gasoline composition of claim 1, having a minimum latent heat of vaporization of 259.47 kJ/l (903 BTU/gal) at 15.6°C (60°F).

14. The gasoline composition of claim 1, having a minimum Bunsen burner laminar flame velocity of 48 cm/s (using methanol at 57.2 cm/s as bench mark).

15. The gasoline composition of claim 1, having a minimum Bunsen burner laminar flame velocity of 50 cm/s (using methanol at 57.2 cm/s as bench mark).

16. The gasoline composition of claim 1, wherein MMT is in a concentration of 0.008 g Mn/l (1/32 g Mn/gal).

## Patentansprüche

1. Thermisch effiziente unverbleite Kraftfahrzeugbenzin-Kohlenwasserstoffkraftstoffzusammensetzung, umfassend :
- eine Kohlenwasserstoffbasis,
- ein oxidierte Verbindung, ausgewählt aus Methanol, Ethanol, Methylal, Dimethylcarbonat, MTBE, ETBE und
- 0,004 bis 0,066 g Mn/l (1/64 bis 1/4 g Mn/gal) Methylcyclopentadienylmangantricarbonyl (MMT),
wobei dieser Benzinkraftstoff weiter **dadurch gekennzeichnet ist, dass** er
- eine T-90-Höchsttemperatur, die 174°C (345°F) nicht überschreitet,
- eine minimale Bunsenbrenner-Laminarflammengeschwindigkeit von 46 cm/s (bei einem Methanol-Richtwert von 57,2 cm/s),
- einen Aromatengehalt von 5 bis 35 Volumenprozent aufweist, und
- einen Schwefelgehalt aufweist, der 300 ppm nicht überschreitet.

2. Benzinzusammensetzung von Anspruch 1, welche eine T-90-Höchsttemperatur von 166°C (330°F) aufweist.

3. Benzinzusammensetzung von Anspruch 1, welche eine T-90-Höchsttemperatur von 149°C (300°F) aufweist.

4. Benzinzusammensetzung von Anspruch 1, welche eine T-90-Höchsttemperatur von 143°C (290°F) aufweist.

5. Benzinzusammensetzung von Anspruch 1, welche eine T-90-Höchsttemperatur von 138°C (280°F) aufweist.

6. Benzinzusammensetzung von Anspruch 1, welche eine T-90-Höchsttemperatur von 132°C (270°F) aufweist.

7. Benzinzusammensetzung von Anspruch 1, welche einen Schwefelgehalt aufweist, der 100 ppm nicht überschreitet.

8. Benzinzusammensetzung von Anspruch 1, welche einen Schwefelgehalt aufweist, der 50 ppm nicht überschreitet.

9. Benzinzusammensetzung von Anspruch 1, welche einen Schwefelgehalt aufweist, der 10 ppm nicht überschreitet.

10. Benzinzusammensetzung von Anspruch 1, welche eine minimale latente Verdampfungswärme von 251,1 kJ/l (900 BTU/gal) bei 15,6°C (60°F) aufweist.

11. Benzinzusammensetzung von Anspruch 1, welche eine minimale latente Verdampfungswärme von 252,5 kJ/l (905 BTU/gal) bei 15,6°C (60°F) aufweist.

12. Benzinzusammensetzung von Anspruch 1, welche eine minimale latente Verdampfungswärme von 253,9 kJ/l (910 BTU/gal) bei 15,6°C (60°F) aufweist.

13. Benzinzusammensetzung von Anspruch 1, welche eine minimale latente Verdampfungswärme von 259,47 kJ/l (930 BTU/gal) bei 15,6°C (60°F) aufweist.

14. Benzinzusammensetzung von Anspruch 1, welche eine minimale Busenbrenner-Laminarflammengeschwindigkeit von 48 cm/s aufweist (unter Verwendung von Methanol bei 57,2 cm/s als Richtwert).

15. Benzinzusammensetzung von Anspruch 1, welche eine minimale Busenbrenner-Laminarflammengeschwindigkeit von 50 cm/s aufweist (unter Verwendung von Methanol bei 57,2 cm/s als Richtwert).

16. Benzinzusammensetzung von Anspruch 1, wobei MMT in einer Konzentration von 0,008 g Mn/l (1/32 g Mn/gal) vorliegt.

## Revendications

1. Composition de carburant à base d'hydrocarbure pour faire office d'essence sans plomb à rendement thermique pour véhicule automobile comprenant:
- une base d'hydrocarbure ;
- un composé oxygéné choisi parmi le groupe comprenant du méthanol, de l'éthanol, du méthylal, du carbonate de diméthyle, du MTBE, du ETBE, et
- à concurrence de 0,004 à 0,066 g Mn/l (1/64 à 1/4 g Mn/gal) de méthylcyclopentadiényl manganèse tricarbonyle (MMT),
ledit carburant sous forme de l'essence étant **caractérisé en outre par le fait qu'**il possède :
- une température T-90 maximale qui n'est pas supérieure à 174 °C (345° F) ;
- une vitesse de flamme laminaire minimale d'un bec bunsen de 46 cm/s (en utilisant du méthanol à 57,2 cm comme référence) ;
- une teneur en composés aromatiques de 5 % à 35 % en volume ; et
- une teneur en soufre qui n'est pas supérieure à 300 ppm.

2. Composition d'essence selon la revendication 1, possédant une température T-90 maximale qui n'est pas supérieure à 166 °C (330° F).

3. Composition d'essence selon la revendication 1, possédant une température T-90 maximale qui n'est pas supérieure à 149 °C (300° F).

4. Composition d'essence selon la revendication 1, possédant une température T-90 maximale qui n'est pas supérieure à 143 °C (290° F).

5. Composition d'essence selon la revendication 1, possédant une température T-90 maximale qui n'est pas supérieure à 138 °C (280° F).

6. Composition d'essence selon la revendication 1, possédant une température T-90 maximale qui n'est pas supérieure à 132 °C (270° F).

7. Composition d'essence selon la revendication 1, possédant une teneur en soufre qui n'est pas supérieure à 100 ppm.

8. Composition d'essence selon la revendication 1, possédant une teneur en soufre qui n'est pas supérieure à 50 ppm.

9. Composition d'essence selon la revendication 1, possédant une teneur en soufre qui n'est pas supérieure à 10 ppm.

10. Composition d'essence selon la revendication 1, possédant une chaleur latente d'évaporation de 251,1 kJ/l (900 BTU/gal) à 15,6 °C (60 °F).

11. Composition d'essence selon la revendication 1, possédant une chaleur latente d'évaporation de 252,5 kJ/l (905 BTU/gal) à 15,6 °C (60 °F).

12. Composition d'essence selon la revendication 1, possédant une chaleur latente d'évaporation de 253,9 kJ/l (910 BTU/gal) à 15,6 °C (60 °F).

13. Composition d'essence selon la revendication 1, possédant une chaleur latente d'évaporation de 259,47 kJ/l (930 BTU/gal) à 15,6 °C (60 °F).

14. Composition d'essence selon la revendication 1, possédant une vitesse de flamme laminaire minimale d'un bec bunsen de 48 cm/s (en utilisant du méthanol à 57,2 cm comme référence).

15. Composition d'essence selon la revendication 1, possédant une vitesse de flamme laminaire minimale d'un bec bunsen de 50 cm/s (en utilisant du méthanol à 57,2 cm comme référence).

16. Composition d'essence selon la revendication 1, dans laquelle la concentration du MMT s'élève à 0,008 g Mn/l (1/32 g Mn/gal).
